(19) Europäisches Patentamt
European Patent Office
Office européen des brevets

(11) EP 1 607 452 B1

(12) # EUROPÄISCHE PATENTSCHRIFT

(45) Veröffentlichungstag und Bekanntmachung des Hinweises auf die Patenterteilung:
**30.08.2006 Patentblatt 2006/35**

(51) Int Cl.:
*C09D 7/00* (2006.01) *C09D 7/12* (2006.01)

(21) Anmeldenummer: **05103786.9**

(22) Anmeldetag: **06.05.2005**

(54) **Lackformulierung zur Verbesserung der Oberflächeneigenschaften**

Coating composition for improving for improving surface properties

Composition de revêtement pour améliorer les propriétés de surface

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004029074**

(43) Veröffentlichungstag der Anmeldung:
**21.12.2005 Patentblatt 2005/51**

(73) Patentinhaber: **Degussa AG**
**D-45764 Marl (DE)**

(72) Erfinder:
- **Christian, Hans-Dieter**
  **63755, Alzenau (DE)**
- **Behl, Reinhard**
  **63755, Alzenau (DE)**
- **Köhler, Hans-Werner**
  **63486, Bruchköbel (DE)**
- **Schmeier, Uwe**
  **63594, Hasselroth (DE)**
- **Meyer, Jürgen**
  **63811, Stockstadt (DE)**

(56) Entgegenhaltungen:
**EP-A- 0 924 271** **WO-A-01/42375**
**US-B1- 6 379 445**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 607 452 B1

Printed by Jouve, 75001 PARIS (FR)

**Beschreibung**

Die vorliegende Erfindung betrifft Lackformulierungen, enthaltend oberflächenmodifizierte Siliciumdioxide, mit verbesserten anwendungstechnischen Eigenschaften sowie deren Verwendung.

Klarlacke werden in großem Umfang industriell zur Beschichtung verschiedenster Oberflächen wie z. B. von Holz, von Kunststoffen oder von Metallen eingesetzt (Ullmann, 4. Auflage, Band 15, S. 589 ff.). Da die Oberfläche des lackierten Gegenstands in der Regel gut zu erkennen sein soll, ist die Transparenz solcher Lacke eine ihrer wesentlichsten Eigenschaften. Die zu beschichtenden Oberflächen weisen oft ein hohen Glanz auf. Häufig besteht daher die Anforderung an den Lack, die Oberfläche matt erscheinen zu lassen. Dies kann durch den Zusatz von Mattierungsmitteln, die in den Klarlack eingearbeitet werden, erreicht werden.

Diese Mattierungsmittel bestehen aus natürlichen Materialien oder werden synthetisch hergestellt. Sie liegen in Form feinteiliger Partikel vor (ca. 1 bis 30 μm) und weisen idealerweise folgende Eigenschaften auf: hohes Porenvolumen, enge Partikelverteilung, geeignete Partikelgröße abgestimmt auf die jeweilige Anwendung und enge Porenverteilung. Üblicherweise werden als Mattierungsmittel Kieselsäuren (Fällungskieselsäuren und auf Basis pyrogener Kieselsäuren hergestellte Kieselsäuren) und/oder Silicagele eingesetzt.

Bei der Verwendung von Mattierungsmitteln kann das Problem auftreten, dass je nach Partikelgröße und Brechungsindex sowohl des Lackes als auch des Mattierungsmittels die Transparenz des Klarlacks beeinträchtigt wird. Besonders auffällig wird dies, wenn der Klarlack auf einen glänzenden, schwarzen Untergrund appliziert wird. Bei schlechter Transparenz erscheint die schwarze Fläche dem Betrachter als gräulich, was in der Anwendung unerwünscht ist.

Ausgehend vom zuvor genannten Stand der Technik bestand daher die Aufgabe der vorliegenden Erfindung darin, neuartige Lackformulierungen bereitzustellen, bei denen die zuvor genannten Nachteile zumindest teilweise behoben sind. Insbesondere sollen die erfindungsgemäßen Lackformulierungen verbesserte anwendungstechnische Eigenschaften wie zum Beispiel eine sehr gute Transparenz aufweisen.

Überraschend wurde gefunden, dass diese Aufgabe durch die in der nachfolgenden Beschreibung sowie den Ansprüchen und den Beispielen näher definierten erfindungsgemäßen Lackformulierungen gelöst wird.

Gegenstand der vorliegenden Erfindung sind daher Lackformulierungen, enthaltend zumindest ein oberflächenmodifiziertes Siliciumdioxid, dadurch gekennzeichnet, dass sie bei einem 60°-Reflektometerwert von < 3 eine Schwarzzahl $M_y$ von mindestens 140 aufweisen.

Weiterhin Gegenstand der vorliegenden Erfindung ist die Verwendung der erfindungsgemäßen Lackformulierungen, insbesondere zur Beschichtung von Kunststoffen und natürlichen und synthetischen Ledern, die bevorzugt für die Innenausstattung von Automobilen eingesetzt werden. Sie werden besonders bevorzugt als Klarlack eingesetzt.

Mit den erfindungsgemäßen Lackformulierungen ist es gelungen, Lackformulierungen enthaltend Siliciumdioxide herzustellen, deren Transparenz durch die Siliciumdioxide nicht oder zumindest nur sehr wenig negativ beeinflusst wird.

Neben den hervorragenden Transparenzwerten zeichnen sich die erfindungsgemäßen **Lackformulierungen durch:**

- ein gutes Schwebeverhalten,
- eine hohe Mattierungseffizienz und
- gute Kratzfestigkeiten der Lackoberflächen

aus. Sie eignen sich daher hervorragend für die Beschichtung von Kunststoffen, die für die Innenausstattung von Automobilen verwendet werden.

Ein weiterer überraschender Effekt der erfindungsgemäßen Lackformulierungen ist, dass diese einen verbesserten Soft-Feel-Effekt zeigen. D. h. Oberflächen, die mit den erfindungsgemäßen Lacken beschichtet wurden fühlen sich angenehm weich und natürlich an. Diese Eigenschaft führt dazu, dass die erfindungsgemäßen Lackformulierungen insbesondere bei Anwendungen im Bereich der Ausstattung von Wohnräumen oder Innenausstattungen von Automobilen große Vorteile gegenüber bekannten Lackformulierungen aufweisen.

Die vorliegenden Erfindung wird nachfolgend im Detail beschrieben, wobei zunächst einige wichtige Begriffe definiert werden.

Unter Lackformulierung im Sinne der vorliegenden Erfindung sind Lackformulierungen, enthaltend zumindest eine Polymerkomponente und/oder ein Gemisch aus mehreren physikalisch oder chemisch vernetzenden Polymerkomponenten, zumindest einem Lösemittel und zumindest einem oberflächenmodifizierten Siliciumdioxid zu verstehen. Bei den erfindungsgemäßen Lackformulierungen handelt es sich bevorzugt um 1-Komponenten-Lacke, 2-Komponenten-Lacke und UV-Lacke, insbesondere Polyurethanlacke, und ganz besonders bevorzugt um Klarlacke und mattierte Lackformulierungen.

Ein Klarlack im Sinne der Erfindung ist ein Beschichtungsstoff, der, auf einem Untergrund aufgetragen, eine transparente Beschichtung mit schützenden, dekorativen oder spezifisch technischen Eigenschaften bildet. In einem

Beschichtungssystem schützt der Klarlack als oberste Schicht die darunter liegenden Schichten gegen mechanische Beschädigungen und Witterungseinflüsse. Ein Klarlack enthält keine Pigmente.

Insbesondere bei Klarlacken ist Transparenz des Lackes, d. h. der optische Eindruck, wie klar und unverfälscht die Oberfläche des mit dem Klarlack lackierten Materials nach dessen Trocknung durch den Lack hindurch zu erkennen ist, ein Maß für die Güte des Lackes. Wird der Klarlack auf einen glänzenden schwarzen Untergrund appliziert, kann als Maß für die Transparenz dieses Lacks die Schwarzzahl $M_y$ herangezogen werden.

Lacke mit Soft-Feel-Effekt zeichnen sich durch spezielle haptische Eigenschaften ihrer Oberfläche aus. So wird bei solchen Lacken ein angenehmes Griffempfinden, eine Art Gummieffekt, erzielt, wenn man mit der Hand darauf reibt.

Siliciumdioxide im Sinne der vorliegenden Erfindung sind ausgewählt aus der Gruppe, die aus Fällungskieselsäuren, pyrogene Kieselsäuren, Kieselgelen, modifizierten pyrogenen Kieselsäuren sowie Mischungen besagter Siliciumdioxide besteht. Wurde die Oberfläche der Siliciumdioxide mit zumindest einem Polymeren modifiziert, so werden diese als oberflächenmodifizierte Siliciumdioxide bezeichnet. Unter modifizierten pyrogenen Kieselsäuren (aus pyrogenen Kieselsäuren hergestellten Kieselsäuren) werden dabei Kieselsäure verstanden, die auf Basis pyrogener Kieselsäuren nach DE 24 14 478 hergestellt werden können.

Unter Oberflächenmodifizierung ist die chemische und/oder physikalische Anbindung organischer Komponenten an die Oberfläche der Siliciumdioxidpartikel zu verstehen. D. h. bei oberflächenmodifizierten Siliciumdioxiden ist zumindest ein Teil der Oberfläche von zumindest einem Teil der Siliciumdioxidpartikel mit dem oberflächenmodifizierenden Mittel belegt.

Die erfindungsgemäßen Lackformulierungen enthalten zumindest ein oberflächenmodifiziertes Siliciumdioxid mit einem Anteil von 0.5 - 15 Gew.-%, vorzugsweise 1 - 10 Gew.-% und sind dadurch gekennzeichnet, dass sie bei einem 60°-Reflektometerwert von < 3 eine Schwanzzahl $M_y$ von mindestens 140, bevorzugt von mindestens 142 und besonders bevorzugt mindestens 144 aufweisen. Die Schwarzzahl $M_y$ kann einen Wert von bis zu 250, bevorzugt bis zu 200, besonders bevorzugt bis zu 180, ganz besonders bevorzugt bis zu 165 und insbesondere bis zu 155 annehmen. Weiterhin können die erfindungsgemäßen Lackformulierungen eine oder mehrere der folgenden Komponenten enthalten:

- 5 - 99.5 Gew.-%, vorzugsweise 20 - 80 Gew.-%, insbesondere 35 - 70 Gew.-% einer Polymerkomponente oder eines Gemisches aus zwei oder mehreren physikalisch oder chemisch vernetzenden Polymerkomponenten (= Bindemittel und Härterkomponenten) und/oder
- 0 - 80 Gew.-%, vorzugsweise 20 - 70 Gew.-%, insbesondere 30 - 55 Gew.-% einer niedermolekularen als Lösemittel fungierenden Komponente oder eines Gemisches solcher niedermolekularer Komponenten.

Neben den genannten Komponenten können die erfindungsgemäßen Lackformulierungen noch weitere üblicherweise in Lacken verwendete Hilfsstoffe und Additive wie z. B. Weichmacher, Stabilisatoren, Phasenvermittler, Pigmente, oberflächenaktive Stoffe, Trockenstoffe, Katalysatoren, Initiatoren, Photosensibilisatoren, Inhibitoren, Lichtschutzmittel, und Konservierungsmittel aufweisen.

Alle genannten Vorzugsbereiche können unabhängig voneinander eingestellt werden, wobei zu beachten ist, dass die besonderen Eigenschaften der erfindungsgemäßen Lackformulierungen durch Kombination aller zuvor genannten Komponenten erreicht werden. Insbesondere haben die verwendeten oberflächenmodifizierten Siliciumdioxide einen wichtigen Einfluss auf die Eigenschaften der Lackformulierungen.

Die erfindungsgemäßen Lackformulierungen können als Bindemittel die in der Lack- und Beschichtungstechnologie üblichen Harze, wie sie z. B. in "*Lackharze, Chemie, Eigenschaften und Anwendungen,* Hrsg. D. Stoye, W. Freitag, Hanser Verlag, München, Wien 1996", beschrieben sind, aufweisen. Der Inhalt dieser Druckschrift wird hiermit ausdrücklich in den Inhalt der Beschreibung der vorliegenden Erfindung mit einbezogen. Beispielhaft zu nennen sind u. a. die Polymerisate und Copolymerisate der (Meth)acrylsäure und deren gegebenenfalls weitere funktionelle Gruppen tragenden Ester mit weiteren olefinisch ungesättigten Verbindungen, wie z. B. Styrol; Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte "Alkydharze" wie sie in Ullmann, 3. Auflage, Band 11, Seite 334 ff. beschrieben werden. Der Inhalt dieser Druckschrift wird hiermit ausdrücklich in den Inhalt der Beschreibung der vorliegenden Erfindung mit einbezogen.

Bevorzugt werden als Polymerkomponenten organische, Hydroxylgruppen tragende Verbindungen eingesetzt, z. B. Polyacrylat-, Polyester-, Polycaprolacton-, Polyether-, Polycarbonat-, Polyurethanpolyole und hydroxyfunktionelle Epoxidharze sowie beliebige Mischungen dieser Polymeren. Als besonders bevorzugte polymere organische Verbindungen werden wässrige oder lösemittelhaltige bzw. lösemittelfreie Polyacrylat- und Polyesterpolyole sowie deren beliebige Mischungen eingesetzt.

Geeignete Polyacrylatpolyole sind Copolymerisate von u. a. Hydroxylgruppen aufweisenden Monomeren mit anderen olefinisch ungesättigten Monomeren, wie z. B. Ester der (Meth)acrylsäure, Styrol-, $\alpha$-Methylstyrol, Vinyltoluol,

Vinylester, Malein- und Fumarsäuremono- und -dialkylester, α-Olefine und weiteren ungesättigten Oligomeren und Polymeren.

Besonders geeignete Polyacrylatpolyole weisen ein mittels Gelpermeationschromatographie (Standard Polystyrol) bestimmbares, mittleres gewichtsgemitteltes Molekulargewicht von 2 000 bis 100 000 g/mol, vorzugsweise 2 500 bis 50 000 g/mol und besonders bevorzugt 3 100 bis 40 000 g/mol, eine Glasübergangstemperatur TG von -50 °C bis 100°C, vorzugsweise -40 °C bis 90 °C und besonders bevorzugt von -30 °C bis 80°C, eine Säurezahl von < 30 mg KOH/g, vorzugsweise < 25 mg KOH/g sowie einen Hydroxylgruppengehalt von 0.5 bis 14.0 Gew. %, vorzugsweise 0.5 - 10 Gew. % und ganz besonders bevorzugt 1.0 bis 8.0 Gew. % auf und können aus

a) 0 bis 70 Gew.-%, vorzugsweise 5 bis 70 Gew.-% mindestens eines ungesättigten aromatischen Monomeren, wie Styrol, Methylstyrol oder Vinyltoluol,

b) 0 bis 70 Gew.-%, vorzugsweise 5 bis 70 Gew.-% mindestens eines (cyclo)aliphatischen Esters der Acryl- und/oder Methacrylsäure mit 1 bis 18 Kohlenstoffatomen im (Cyclo)alkylrest,

c) 4 bis 95 Gew.-%, vorzugsweise 10 bis 60 Gew.-% mindestens eines Hydroxyalkylesters der Acryl- und/oder Methacrylsäure mit 2 bis 4 Kohlenstoffatomen im Hydroxyalkylrest und/oder Anlagerungsprodukte von Monoepoxiden an Acryl- und/oder Methacrylsäure,

d) 0 bis 10 Gew.-%, vorzugsweise 0.1 bis 5 Gew.-% mindestens einer monoolefinisch ungesättigten Mono- oder Dicarbonsäure mit 3 bis 7 Kohlenstoffatomen und/oder mindestens einem Maleinsäure- bzw. Fumarsäurehalbester mit 1 bis 14 Kohlenstoffatomen im Alkoholrest und

e) 0 bis 30 Gew.-%, vorzugsweise 0 bis 20 Gew.-% weiterer copolymerisierbarer, (auch mehrfach) olefinisch ungesättigten monomeren und/oder polymeren Verbindungen,

bestehen.

Die beschriebenen hydroxylfunktionellen Polyole können in einkomponentigen wie auch in zweikomponentigen Lacksystemen zusammen mit den in der Lack- und Beschichtungstechnologie üblichen Härtern verwendet werden. Als Härter hierfür kommen beispielsweise Polyisocyanate oder mit Abspaltern wie Methylethylketoxim, Caprolactam, Malonsäureestern, Triazol oder 2,5-Dimethylpyrazol blockierte Polyisocyanate oder (teilweise) veretherte Melaminformaldehydharze in Betracht, wie sie z.B. in Lackharze, Chemie, Eigenschaften und Anwendungen, Hrsg. D. Stoye, W. Freitag, Hanser Verlag, München, Wien, 1996 beschrieben sind. Der Inhalt dieser Druckschrift wird hiermit ausdrücklich in den Inhalt der Beschreibung der vorliegenden Erfindung mit einbezogen.

Bevorzugt ist die Anwendung von wässrigen oder lösemittelhaltigen Bindemitteln in zweikomponentigen Systemen zusammen mit Polyisocyanaten auf Basis von Hexamethylendiisocyanat, Isophorondiisocyanat, 4,4-Disocyanatodicyclohexylmethan, Tetramethylendiisocyanat, 2-Methylpentamethylendiisocyanat, 2,2,4- und 2,3,3-Trimethylhexamethylendiisocyanat (THDI), 1,4-Diisocyanato-cyclohexan, 3-Isocyanatomethyl-1-methyl-1-isocyanatocyclohexan (IMCI), a,a,a',a'-Tetramethyl-m- oder -p-xylylen-diisocyanat (TMXDI), 1,4- und 1,3-Xylylendiisocyanat (XDI) Hexahydroxylylendiisocyanat (H6-XDI) und/oder deren Gemische sowie gegebenenfalls deren hydrophilierte Varianten für wässrige Bindemittel, wie sie beispielsweise in DE 41 36 618 beschrieben sind. Der Inhalt der DE 41 36 618 wird hiermit ausdrücklich in den Inhalt der vorliegenden Beschreibung einbezogen.

Besonders bevorzugt sind aber die Polyisocyanate auf Basis von Hexamethylendiisocyanat, Isophorondiisocyanat und 4,4-Diisocyanatodicyclohexylmethan.

Diese Polyisocyanate werden als Härter in hochwerten Polyurethanlacken eingesetzt, die eine hervorragende Chemikalienbeständigkeit und eine hohe mechanische Beständigkeit aufweisen.

Als Lösungsmittel können die erfindungsgemäßen Lackformulierungen gebräuchliche Lösemittel, wie aromatische, aliphatische, araliphatische oder cycloaliphatische Kohlenwasserstoffe, teilweise oder vollständig halogenierte aromatische, aliphatische, araliphatische oder cycloaliphatische Kohlenwasserstoffe, Alkohole wie Methanol, Ethanol, i-Propanol, Butanol, Benzylalkohol, Diacetonalkohol, Ester wie z.B. Ethylacetat, Propylacetat, Butylacetat, Etherester wie z. B. Methoxypropylacetat oder Butylglykolacetat, Ketone wie Aceton, Methylethylketon, Methylisobutylketon oder Cyclohexanon, stark polare Lösemittel wie Dimethylformamid und Wasser sowie Gemische davon aufweisen.

Werden diese Lösemittel als Dispergiermedium für die erfindungsgemäßen Lackformulierungen eingesetzt, können diesen weitere Stoffe zugesetzt werden. Bevorzugt sind dabei solche Stoffe, die auch für die spätere Weiterverwendung vorgesehen sind oder die die Deagglomeration bzw. die Stabilität der deagglomerierten Materialien verbessern, z. B. Dispergierharze oder - additive.

Bevorzugt sind die oligomeren oder polymeren organischen Verbindungen, wie z. B. die oben aufgeführten in der Lack- und Beschichtungstechnologie gebräuchlichen Harze und Bindemittel.

Auch die in Mehrkomponentensystemen verwendeten Kombinationsharze, wie z. B. die als Härter fungierenden Amin- und Melaminharze, Polyisocyanate die als blockierte Polyisocyanate bezeichneten Addukte aus aromatischen oder aliphatischen Polyisocyanaten und sogenannten Abspaltern wie Methylethylketoxim, Caprolactam, Malonsäureestern oder Triazol und 2,5-Dimethylpyrazol können anteilig im Dispergiermedium mitverwendet werden. Für Verfahrensweisen, in denen Wasser als wesentlicher Bestandteil des Dispergiermediums verwendet wird, sind als Zusatzstoffe insbesondere wasserlösliche oder wasserverträgliche Verbindungen, wie z. B. teil- oder vollverseifte Polyvinylacetate oder hydrophilierte Varianten der zuvor genannten Verbindungsklassen geeignet.

Die für die Herstellung des Dispergiermediums in Frage kommenden Lösemittel und Zusatzstoffe können beliebig miteinander abgemischt werden. Die erfindungsgemäßen Lackformulierungen können mit allen üblichen Härtern zur Herstellung von Überzügen gemischt werden.

Als weiteren Bestandteil enthalten die erfindungsgemäßen Lackformulierungen spezielle oberflächenmodifizierte Siliciumdioxide. Bei den genannten Siliciumdioxiden handelt es sich um Fällungskieselsäuren, pyrogene Kieselsäuren, Kieselgele oder aus pyrogenen Kieselsäuren hergestellte Kieselsäuren, deren Oberfläche mit Polymeren modifiziert wurde. Die Wahl der geeigneten oberflächenmodifizierten Kieselsäure hat einen entscheidenden Einfluss auf die Eigenschaften der Lackformulierung.

Bevorzugt enthalten die erfindungsgemäßen Lackformulierungen zumindest ein Siliciumdioxid, dessen Oberfläche mit zumindest einem thermoplastischen Elastomeren und/oder einem Polyorganosiloxan und/oder modifizierten Polyorganosiloxan modifiziert wurde. Zur Oberflächenmodifikation des Siliciumdioxids können thermoplastische Elastomere in Form von wässrigen und/oder lösemittelhaltigen Dispersionen eingesetzt werden.
In einer bevorzugten Ausführungsform enthalten die erfindungsgemäßen Lackformulierungen zumindest ein Siliciumdioxid dessen Oberfläche mit zumindest einem Polysiloxan und/oder modifizierten Polysiloxan modifiziert wurde, wobei es sich besonders bevorzugt um oberflächenmodifizierte Siliciumdioxide handelt wie sie in der DE 10 2004 012 090 beschrieben werden bzw. um Polysiloxane und/oder modifizierte Polysiloxane, wie sie in der DE 36 27 782 beschrieben werden. Der Inhalt besagter Patentanmeldungen/Patente wird hiermit explizit in den Inhalt der vorliegenden Beschreibung aufgenommen.

In einer weiteren bevorzugten Ausführungsform enthalten die erfindungsgemäßen Lackformulierungen zumindest ein oberflächenmodifiziertes Siliciumdioxid, dessen Oberfläche mit einem thermoplastischen Elastomeren modifiziert wurde, wobei als thermoplastische Elastomere Dimethylpolysiloxan-Elastomere mit endständigen Epoxygruppen, insbesondere mit einem Molekulargewicht von größer 100.000 eingesetzt werden.

In einer weiteren bevorzugten Ausführungsform enthalten die erfindungsgemäßen Lackformulierungen zumindest ein Siliciumdioxid, dessen Oberfläche mit zumindest einem thermoplastischen Elastomer modifiziert wurden, wobei das verwendete thermoplastische Elastomer hergestellt werden kann durch:

(I) Vermischen

(A) eines rheologisch beständigen Polyamidharzes, das einen Schmelzpunkt oder eine Glasumwandlungstemperatur von 25 °C bis 275 °C aufweist;

(B) einer Siliconbasis, die umfasst:

(B') 100 Masseteile eines Diorganopolysiloxan-Kautschuks, der eine Plastizität von mindestens 30 und durchschnittlich mindestens 2 Alkenylgruppen in seinem Molekül aufweist, und
(B") 5 bis 200 Masseteile eines Verstärkerfüllstoffs, wobei das Masseverhältnis zwischen der Siliconbasis und dem Polyamidharz größer als 35 : 65 bis 85 : 15 ist;

(C) für jede 100 Masseteile des Polyamidharzes einen Verträglichkeitsvermittler, der ausgewählt wird aus:

(i) 0.1 bis 5 Masseteilen eines Haftvermittlers, der ein Molekulargewicht unter 800 aufweist und in seinem Molekül mindestens zwei Gruppen enthält, die unabhängig ausgewählt werden aus ethylenisch ungesättigten Gruppen, Epoxy, Anhydrid, Silanol, Carboxyl, Oxazolin oder Alkoxy mit 1 bis 20 Kohlenstoffatomen,

(ii) 0.1 bis 10 Masseteilen eines funktionellen Diorganopolysiloxans, das in seinem Molekül mindestens eine Gruppe aufweist, die ausgewählt wird aus Epoxy, Anhydrid, Silanol, Carboxyl, Amin, Oxazolin oder Alkoxy mit 1 bis 20 Kohlenstoffatomen, oder

(iii) 0.1 bis 10 Masseteilen eines Copolymers, das mindestens einen Diorganopolysiloxan-Block und mindestens einen Block umfaßt, der ausgewählt wird aus Polyamid, Polyether, Polyurethan, Polyharnstoff, Polycarbonat oder Polyacrylat;

(D) einer Organohydrido-Siliciumverbindung, die durchschnittlich mindestens 2 an Silicium gebundene Wasserstoffgruppen in ihrem Molekül enthält; und

(E) eines Hydrosilylierungs-Katalysators,

wobei die Komponenten (D) und (E) in einer Menge vorhanden sind, die zum Vulkanisieren des Diorganopolysiloxans (B') ausreicht; und wobei

(II) das Diorganopolysiloxan (B') dynamisch vulkanisiert wird.

Die Erfindung betrifft ferner ein thermoplastisches Elastomer, das nach dem obigen Verfahren hergestellt wird.

Ganz besonders bevorzugt enthalten die erfindungsgemäßen Lackformulierungen zumindest ein oberflächenmodifiziertes Siliciumdioxid, dessen Oberfläche mit einem thermoplastischen Polymer modifiziert wurde, welches nach dem zuvor beschriebenen Verfahren hergestellt wurde, wobei die Komponenten (A) bis (E) wie folgt definiert sind:

Komponente (A):

Die Komponente (A) ist ein thermoplastisches Polyamidharz. Diese unter dem allgemeinen Begriff "Nylon" bekannten Harze sind langkettige synthetische Polymere, die entlang der Hauptpolymerkette Amidbindungen (d. h. -C(O)-NH-) enthalten. Für die Zwecke der vorliegenden Erfindung hat das Polyamidharz einen Schmelzpunkt (Schmp.) oder, wenn das Polyamid amorph ist, eine Glasübergangstemperaur (Tg) zwischen Raumtemperatur (d.h. 25 °C) und 275 °C. Bei Versuchen zur Herstellung von TPSiV (= thermoplastic silicone vulcanizate)-Elastomeren aus Polyamiden mit höheren Schmelzpunkten (z.B. Nylon 4/6) ergaben sich schlechte physikalische Eigenschaften, wobei die Reißdehnung solcher Produkte unter den gemäß der vorliegenden Erfindung erforderlichen 25 % liegt. Darüber hinaus wird das Polyamidharz für die Zwecke der vorliegenden Erfmdung vorzugsweise getrocknet, indem man bei erhöhten Temperaturen ein trockenes Inertgas über Harzkügelchen oder Harzpulver leitet. Der mit akzeptablen Eigenschaften und Verarbeitungen vereinbare Trocknungsgrad hängt von dem spezifischen Polyamid ab, und sein jeweiliger Wert wird vom Hersteller empfohlen oder lässt sich durch einige einfache Versuche ermitteln. Im allgemeinen wird bevorzugt, dass das Polyamidharz höchstens ca. 0.1 Massenprozent Feuchtigkeit enthält. Schließlich muss das Polyamid auch unter den Mischbedingungen, die für die Herstellung des TPSiV-Elastomers erforderlich sind, rheologisch beständig sein, wie unten beschrieben. Diese Beständigkeit wird am reinen Harz bei geeigneter Verarbeitungstemperatur bewertet; ändert sich die Schmelzviskosität (Drehmoment beim Mischen) um mehr als 20% innerhalb der normalerweise für die Herstellung der entsprechenden TPSiVs erforderlichen Zeit (z.B. 10 bis 30 Minuten in einem Behältermischer), weist dies darauf hin, dass das Harz nicht innerhalb des Umfangs der vorliegenden Erfindung liegt. Demzufolge wurde beispielsweise eine getrocknete Nylon-11-Probe, deren Schmelzpunkt 198 °C beträgt, ungefähr 15 Minuten in einem Behältermischer unter einer Stickstoffgasspülung bei 210 bis 220 °C gemischt, wobei das beobachtete Drehmoment beim Mischen um ca. 200 % zunahm. Ein solches Polyamidharz ist kein geeigneter Kandidat für das vorliegende Verfahren.

Im Gegensatz zu den obigen Einschränkungen kann das Harz (A) irgendein thermoplastisches kristallines oder amorphes, festes Homopolymer, Copolymer oder Terpolymer mit hohem Molekulargewicht sein, das in der Polymerkette sich wiederholende Amid-Einheiten aufweist.

Bei Copolymer- und Terpolymer-Systemen sind über 50 Molprozent der Wiederholungseinheiten amidhaltige Einheiten. Beispiele für geeignete Polyamide sind Polylactame wie Nylon 6, Polyenantholactam (Nylon 7), Polycapryllactam (Nylon 8), Polylauryllactam (Nylon 12) und dergleichen; Homopolymere von Aminosäuren wie Polypyrrolidinon (Nylon 4); Copolyamide von Dicarbonsäure und Diamin wie Nylon 6/6, Polyhexamethylenazelamid (Nylon 6/9), Polyhexamethylen-sebacamid (Nylon 6/10), Polyhexamethylenisophthalamid (Nylon 6,I), Polyhexamethylendodecansäure (Nylon 6/12) und dergleichen; aromatische und teilweise aromatische Polyamide; Copolyamide wie Copolymere von Caprolactam und Hexamethylenadipamid (Nylon 6,6/6), oder ein Terpolyamid (z.B. Nylon 6,6/6,6); Blockcopolymere wie Polyether-Polyamide; oder Mischungen davon. Bevorzugte Polyamidharze sind Nylon 6, Nylon 12, Nylon 6/12 und Nylon 6/6.

Siliconbasis (B):

Die Siliconbasis (B) ist eine gleichmäßige Mischung aus Diorganopolysiloxan-Kautschuk (B') und einem Verstärkerfüllstoff (B").

Dabei ist Diorganopolysiloxan (B') ein hochkonsistentes (Kautschuk) Polymer oder Copolymer, das mindestens 2 Alkenylgruppen mit 2 bis 20 Kohlenstoffatomen in seinem Molekül enthält. Als Beispiele für die Alkenylgruppe sind insbesondere Vinyl, Allyl, Butenyl, Pentenyl, Hexenyl und Decenyl zu nennen. Die Position der Alkenylfunktionalität ist nicht kritisch und kann an den Enden der Molekülketten, an nicht-endständigen Positionen der Molekülkette oder an beiden Positionen gebunden sein. Es wird bevorzugt, dass die Alkenylgruppe Vinyl oder Hexenyl ist und dass diese

Gruppe mit einem Anteil von 0.001 bis 3, vorzugsweise 0.01 bis 1 Massenprozent in dem Diorganopolysiloxan-Kautschuk vorhanden ist.

Die übrigen (d. h. nicht-Alkenyl-) an Silicium gebundenen organischen Gruppen in der Komponente (B') werden unabhängig ausgewählt aus Kohlenwasserstoff- oder Halogenkohlenwasserstoff-Gruppen, die keine aliphatische Ungesättigtheit enthalten. Als Beispiele für diese Gruppen können insbesondere genannt werden: Alkylgruppen mit 1 bis 20 Kohlenstoffatomen wie Methyl, Ethyl, Propyl, Butyl, Pentyl und Hexyl; Cycloalkylgruppen wie Cyclohexyl und Cycloheptyl; Arylgruppen mit 6 bis 12 Kohlenstoffatomen wie Phenyl, Tolyl and Xylyl; Aralkylgruppen mit 7 bis 20 Kohlenstoffatomen wie Benzyl und Phenethyl; und Halogenalkylgruppen mit 1 bis 20 Kohlenstoffatomen wie 3,3,3-Trifluorpropyl und Chlormethyl.

Es versteht sich natürlich, dass diese Gruppen so ausgewählt werden, dass der Diorganopolysiloxan-Kautschuk (B') eine Glasübergangstemperatur (oder Schmelzpunkt) besitzt, die unter Raumtemperatur liegt und dass der Kautschuk deshalb elastomer ist. Methyl macht vorzugsweise mindestens 50, bevorzugter mindestens 90 Molprozent der nichtungesättigten, an Silicium gebundenen organischen Gruppen in der Komponente (B') aus.

Das Polydiorganosiloxan (B') kann also ein Homopolymer oder ein Copolymer sein, das solche organischen Gruppen enthält. Beispiele sind Kautschuke, die unter anderem umfassen: Dimethylsiloxy-Einheiten und Phenylmethylsiloxy-Einheiten; Dimethylsiloxy-Einheiten und Diphenylsiloxy-Einheiten; und Dimethylsiloxy-Einheiten, Diphenylsiloxy-Einheiten und Phenylmethylsiloxy-Einheiten. Die Molekülstruktur ist auch nicht kritisch; als Beispiele für diese Molekülstruktur sind geradkettige und teilweise verzweigte geradkettige Strukturen zu nennen, wobei lineare Strukturen bevorzugt werden.

Spezifische Beispiele für das Organopolysiloxan (B') sind unter anderem:

Dimethylsiloxan-Methylhexenylsiloxan-Copolymere mit Trimethylsiloxy-Endblöcken; Dimethylsiloxan-Methylhexenylsiloxan-Copolymere mit Dimethylhexenlylsiloxy-Endblöcken; Dimethylsiloxan-Methylvinylsiloxan-Copolymere mit Trimethylsiloxy-Endblöcken; Methylphenylsiloxan-Dimethylsiloxan-Methylvinylsiloxan-Copolymere mit Trimethylsiloxy-Endblöcken; Dimethylpolysiloxane mit Dimethylvinylsiloxy-Endblöcken; Dimethylsiloxan-Methylvinylsiloxan-Copolymere mit Dimethylvinylsiloxy-Endblöcken; Methylphenylpolysiloxane mit Dimethylvinylsiloxy-Endblöcken; Methylphenylsiloxan-Dimethylsiloxan-Methylvinylsiloxan-Copolymere mit Dimethylvinylsiloxy-Endblöcken; und ähnliche Copolymere, wobei mindestens eine endständige Gruppe Dimethylhydroxysiloxy ist. Zu den bevorzugten Systemen für Tieftemperaturanwendungen zählen Methylphenylsiloxan-Dimethylsiloxan-Methylvinylsiloxan-Copolymere und Diphenylsiloxan-Dimethylsiloxan-Methylvinylsiloxan-Copolymere, wobei insbesondere der Molgehalt der Dimethylsiloxan-Einheiten ungefähr 93 % beträgt.

Die Komponente (B') kann auch aus Kombinationen von zwei oder mehr Organopolysiloxanen bestehen. Am meisten bevorzugt ist die Komponente (B') ein Polydimethylsiloxan-Homopolymer, das an jedem Ende seines Moleküls durch eine Vinylgruppe terminiert ist, oder ein solches Homopolymer, das auch mindestens eine Vinylgruppe entlang seiner Hauptkette enthält.

Das Molekulargewicht des Diorganopolysiloxan-Kautschuks reicht für die Zwecke der vorliegenden Erfindung aus, um eine Williams-Plastizitätszahl von mindestens ca. 30 nach der Testmethode 926 der American Society for Testing and Materials (ASTM) zu erreichen. Die hier verwendete Plastizitätszahl ist definiert als die Dicke in Millimeter mal 100 bei einem zylindrischen Prüfkörper, der 2 $cm^3$ Volumen und eine Höhe von ungefähr 10 mm hat, nachdem er drei Minuten bei 25 °C einer Drucklast von 49 Newton ausgesetzt war.

Liegt die Plastizität dieser Komponente unter ca. 30, wie bei den niedrigviskosen flüssigen Siloxanen, die von Arkles (US 4,714,739) verwendet wurden, zeigen die durch dynamische Vulkanisation gemäß dem vorliegenden Verfahren hergestellten TPSiVs eine schlechte Gleichmäßigkeit, so dass bei hohen Silicongehalten (z. B. 50 bis 70 Massenprozent) Bereiche mit im wesentlichen nur Silicon und solche mit im wesentlichen nur thermoplastischem Harz auftreten und die Mischungen schwach und bröcklig sind. Die Kautschuke der vorliegenden Erfindung sind beträchtlich viskoser als die beim Stand der Technik eingesetzten Siliconflüssigkeiten. Beispielsweise haben die von Arkles (siehe oben) betrachteten Silicone eine Viskositätsobergrenze von 100.000 cS (0.1 $m^2/s$), und obwohl die Plastizität solch niedrigviskoser Flüssigkeiten nach der ASTM-D-926-Methode schwer messbar ist, wurde festgestellt, dass dies einer Plastizität von ca. 24 entspricht. Obwohl keine absolute Obergrenze für die Plastizität der Komponente (B') besteht, wird dieser Wert generell durch praktische Überlegungen bezüglich der Verarbeitbarkeit in herkömmlichen Mischvorrichtungen eingeschränkt. Die Plastizitätszahl sollte bei ungefähr 100 bis 200, am meisten bevorzugt bei ungefähr 120 bis 185 liegen.

Verfahren zur Herstellung hochkonsistenter, ungesättigte Gruppen enthaltender Polydiorganosiloxane sind gut bekannt und müssen in dieser Beschreibung nicht im Detail erörtert werden. Ein typisches Verfahren zur Herstellung eines alkenylfunktionellen Polymers umfaßt beispielsweise die basekatalysierte Äquilibrierung von cyclischen und/oder linearen Diorganopolysiloxanen in Gegenwart ähnlicher alkenylfunktioneller Spezies.

Die Komponente (B") ist ein feinteiliger Füllstoff, der als Verstärker von Diorganopolysiloxan (B') bekannt ist,

und wird vorzugsweise aus feinteiligen, wärmebeständigen Mineralien wie beispielsweise pyrogenen und gefällten Formen von Kieselsäuren, Kieselsäure-Aerogelen und Titandioxid mit einer spezifischen Oberfläche von mindestens 50 $m^2/g$ ausgewählt. Die pyrogene Form der Kieselsäure ist ein bevorzugter Verstärkerfüllstoff wegen seiner großen Oberfläche, die bis zu 450 $m^2/g$ betragen kann; besonders bevorzugt wird eine pyrogene Kieselsäure, die eine Oberfläche von 50 bis 400 $m^2/g$ und am meisten bevorzugt von 200 bis 380 $m^2/g$ aufweist. Der Füllstoff aus pyrogener Kieselsäure wird vorzugsweise so behandelt, dass er eine hydrophobe Oberfläche erhält, wie es in der Siliconkautschuk-Technik normalerweise praktiziert wird. Dies kann man dadurch erreichen, dass man die Kieselsäure mit einer flüssigen Siliciumorganischen Verbindung reagieren lässt, die Silanolgruppen oder hydrolysierbare Vorläufer von Silanolgruppen enthält. Zu den Verbindungen, die als Füllstoffbehandelnde Mittel eingesetzt werden können und in der Siliconkautschuk-Technik auch als Kriechfestigkeits-Mittel oder Weichmacher bezeichnet werden, zählen solche Inhaltsstoffe wie flüssige Hydroxy- oder Alkoxy-terminierte Polydiorganosiloxane, Hexaorganodisiloxane, Cyclodimethylsilazane und Hexaorganodisilazane mit niedrigem Molekulargewicht. Die behandelnde Verbindung ist vorzugsweise ein oligomeres Hydroxy-terminiertes Diorganopolysiloxan mit einem mittleren Polymerisationsgrad (DP) von 2 bis ca. 100, bevorzugter von ca. 2 bis ca. 10, das zu ungefähr 5 bis 50 Masseteilen für jede 100 Masseteile des Kieselsäure-Füllstoffs eingesetzt wird. Ist die Komponente (B') das bevorzugte vinylfunktionelle oder hexenylfunktionelle Polydimethylsiloxan, ist dieses behandelnde Mittel vorzugsweise Hydroxy-terminiertes Polydimethylsiloxan.

Für die Zwecke der vorliegenden Erfindung werden 5 bis 200, bevorzugt 5 bis 150 und am meisten bevorzugt 20 bis 100 Masseteile des Verstärkerfüllstoffs (B") gleichmäßig mit 100 Masseteilen des Kautschuks (B') vermischt, um die Siliconbasis (B) herzustellen. Dieses Vermischen wird nach in der Siliconkautschuk-Technik gut bekannter Weise im allgemeinen bei Raumtemperatur mit einer Zweiwalzenmühle, einem Innenmischer oder anderen geeigneten Vorrichtung durchgeführt. Alternativ kann man die Siliconbasis vor Ort während des Vermischens vor der dynamischen Vulkanisation des Kautschuks bilden, wie unten näher beschrieben wird. Im letzteren Fall wird die Mischtemperatur unterhalb des Erweichungspunkts oder Schmelzpunkts des Polyamidharzes gehalten, bis sich der Verstärkerfüllstoff gut im Diorganopolysiloxan-Kautschuk dispergiert hat.

Verträglichkeitsvermittler (C):

Der Verträglichkeitsvermittler (C) kann ein Haftvermittler, ein organofunktionelles Diorganopolysiloxan oder ein Siloxan-Copolymer sein. Für die Zwecke der vorliegenden Erfindung wird mindestens ein Verträglichkeitsvermittler bei der Herstellung des thermoplastischen Elastomers eingesetzt.

In einer Ausführungsform ist der Verträglichkeitsvermittler (i) ein Haftvermittler mit einem Molekulargewicht unter 800, der mindestens zwei Gruppen in seinem Molekül enthält, die unabhängig ausgewählt werden aus ethylenisch ungesättigten Gruppen (z.B. Vinyl, Allyl, Butenyl, Pentenyl, Hexenyl, Acrylat und Methacrylat), Epoxy, Anhydrid, Silanol, Hydroxyl, Alkoxy mit 1 bis 20, vorzugsweise 1 bis 10, bevorzugter 1 bis 4 Kohlenstoffatomen, Carboxyl oder Oxazolin. Letztere Gruppe hat die Struktur der Formel (i)

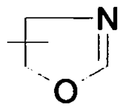

(i)

wobei die Kohlenstoffatome des Rings einen oder mehrere Substituenten enthalten können, die aus Kohlenwasserstoffgruppen mit 1 bis 4 Kohlenstoffatomen ausgewählt werden. Der Haftvermittler kann eine organische oder siloxanbasierte Skelettstruktur haben, solange er mindestens zwei der obigen Gruppen enthält, wobei diese an den Endpositionen, entlang der Hauptkette oder an beiden angeordnet sind. Im Falle von Siloxan-Hauptketten sind die obigen funktionellen organischen Gruppen (d. h.: nicht-Silanol-) über Si-C-Bindungen gebunden an die Siliciumatome (z. B. durch eine zweiwertige Kohlenwasserstoffgruppe wie Trimethylen, Tetramethylen und Dimethylen) oder an eine zweiwertige organische Gruppe, die Sauerstoff- und/oder Stickstoff-Heteroatome enthält, wie beispielsweise Ester, Ether oder Amid. Obwohl die Gruppen gleich sein können, wird bevorzugt, dass mindestens eine davon eine ethylenisch ungesättigte Gruppe - vorzugsweise Vinyl - ist, während mindestens eine andere Gruppe aus den oben genannten Gruppen Epoxy, Anhydrid, Alkoxy, Silanol, Hydroxyl, Carboxyl oder Oxazolin ausgewählt wird.

Beispiele für geeignete Haftvermittler sind unter anderem: Allylglycidylether, Glycidylmethacrylat, 1,2-Epoxy-7-octen, 1,2-Epoxy-9-decen, 1,2-Epoxy-5-hexen, Allyl-Bernsteinsäureanhydrid, Vinyloxazoline, Vinyloxazolin-Derivate wie 2-Isopropenyl-2-oxazolin, Gamma-Glycidoxypropylmethyldimethoxysilan, Gammaglycidoxypyltrimethoxysilan, Beta-(3,4-epoxycyclohexyl)ethyltrimethoxysilan, 1,3-Phenylen-bis(2-oxazolin), Poly(propylenglykol)diglycidylether, Diglycidylether von Bisphenol A, Tris(2,3-epoxypropy)isocyanurat und ungesättigte Diamide wie

$CH_2=CH-(CH_2)_8-CO-NH-(CH_2)_6-NH-CO-(CH_2)_8-CH=CH_2$,

Die Konzentration dieser Haftvermittler kann 0.1 bis 5 und vorzugsweise 0.2 bis 3 Masseteile für jede 100 Masseteile des Polyamids (A) betragen.

In einer anderen Ausführungsform ist der Verträglichkeitsvermittler (ii) ein funktionelles Diorganopolysiloxan mit einem zahlenmittleren Molekulargewicht von mindestens 800, vorzugsweise 800 bis 50.000, bevorzugter 800 bis 15.000. Das funktionelle Diorganopolysiloxan (ii) ist ein Polymer oder Copolymer, bei dem die organischen Gruppen unabhängig ausgewählt werden aus Kohlenwasserstoff- oder Halogenkohlenwasserstoff-Gruppen, die keine aliphatische Ungesättigtheit enthalten, wie oben für die Komponente (B') beschrieben, einschließlich bevorzugter Ausführungsformen davon. Es muss in diesem Polymer oder Copolymer jedoch mindestens eine funktionelle Gruppe vorhanden sein, die wie oben beschrieben ausgewählt wird aus Epoxy, Anhydrid, Silanol, Alkoxy mit 1 bis 20, vorzugsweise 1 bis 10, bevorzugter 1 bis 4 Kohlenstoffatomen, Amin, Carboxyl oder Oxazolin.

Beispiele für eine geeignete Komponente (ii) sind unter anderem: epoxyfunktionelle Polydimethylsiloxane wie Mono(2,3-epoxy)propylether-terminiertes Polydimethylsiloxan, Epoxypropoxypropyl-terminiertes Polydimethylsiloxan, (Epoxycyclohexylethyl)methylsiloxan-Dimethylsiloxan-Copolymere und (Epoxypropoxypropyl)methylsiloxan-Dimethylsiloxan-Copolymere; aminfunktionelle Polydimethylsiloxane wie Aminopropyl-terminiertes Polydimethylsiloxan, Aminoethylaminopropyl-terminiertes Polydimethylsiloxan, Aminopropylgepfropftes Polydimethylsiloxan, Aminoethylaminopropyl-gepfropftes Polydimethylsiloxan; Polydimethylsiloxane, die Anhydridgruppen wie Bernsteinsäureanhydrid-terminiertes Polydimethylsiloxan und Bernsteinsäureanhydrid-gepfropftes Polydimethylsiloxan enthalten; Silanol-terminierte Polydimethylsiloxane; Polydimethylsiloxane, die Carboxylgruppen wie (Mono)carboxydecyl-terminiertes Polydimethylsiloxan und Carboxydecyl-terminiertes Polydimethylsiloxan enthalten; und Polydimethylsiloxane, die Oxazolingruppen wie Vinylxoazolin-gepfropftes Polydimethylsiloxan enthalten.

Die Konzentration des funktionellen Diorganopolysiloxans kann 0.5 bis 10 und vorzugsweise 0.5 bis 5 Masseteile für jede 100 Masseteile des Polyamids (A) betragen.

Im Falle der Verträglichkeitsvermittler (i) und (ii) wird manchmal bevorzugt, dass der Verträglichkeitsvermittler bei einer Temperatur oberhalb des Harz-Schmelzpunktes mit dem Polyamidharz vermischt wird, bevor die Siliconbasis zugesetzt wird. Es wird nicht angestrebt, an einer Theorie oder einem Mechanismus festzuhalten, doch es wird davon ausgegangen, dass dieses Verfahren zu einer Reaktion zwischen den funktionellen Gruppen des Verträglichkeitsvermittlers und entweder den Amid- oder den Endgruppen des Harzes führt, wodurch die Wirkung der Verträglichkeitsvermittlung maximiert wird. Alternativ ist es manchmal von Vorteil, den Verträglichkeitsvermittler einer Mischung des Polyamids und der Siliconbasis zuzusetzen. Auf jeden Fall kann das bevorzugte Verfahren einfach durch Routineversuche bestimmt werden.

In einer weiteren Ausführungsform ist der Verträglichkeitsvermittler (iii) ein Block- oder Pfropfcopolymer, das mindestens einen Diorganopolysiloxan-Block und mindestens einen Block enthält, der ausgewählt wird aus Polyamid, Polyether, Polyurethan, Polyharnstoff, Polycarbonat oder Polyacrylat. Das Copolymer (iii) kann beispielsweise eine Struktur AB, (AB)n, ABA, BAB, A-g-B und B-g-A aufweisen, wobei n eine ganze Zahl mit einem Wert über 1 ist, A für einen Diorganopolysiloxan-Block steht und B einen der oben genannten organischen Blöcke repräsentiert. Der Diorganopolysiloxan-Block ist ein Polymer oder Copolymer, bei dem alle organischen Gruppen unabhängig ausgewählt werden aus Kohlenwasserstoff- oder Halogenkohlenwasserstoff-Gruppen, die keine aliphatische Ungesättigtheit enthalten, wobei diese Gruppen bereits im Zusammenhang mit der Komponente (B') beschrieben wurden. Folglich kann diese Komponente beispielsweise ausgewählt werden aus: Diorganopolysiloxan-Polyether-Block- oder Pfropfcopolymeren, Diorganopolysiloxan-Polyamid-Block- oder Pfropfcopolymeren, Diorganopolysiloxan-Polyurethan-Block- oder Pfropfcopolymeren, Diorganopolysiloxan-Polyharnstoff-Block- oder Pfropfcopolymeren, Diorganopolysiloxan-Polycarbonat-Block- oder Pfropfcopolymeren, Diorganopolysiloxan-Polyacrylat-Block- oder Pfropfcopolymeren oder Diorganopolysiloxan-Polymethacrylat-Block- oder Pfropfcopolymeren, wobei das Diorganopolysiloxan vorzugsweise ein Polydimethylsiloxan-Block ist. Es wird bevorzugt, dass das zahlenmittlere Molekulargewicht des Copolymers (iii) 1.500 bis 50.000, bevorzugter 2.000 bis 20.000 beträgt.

Beispiele für ein Copolymer (iii) sind unter anderem: Polyamid-Polydimethylsiloxan-Copolymere wie die siloxanbasierten Polyamide, die dadurch hergestellt werden, dass ein SiHfunktionelles Dimethylsiloxan mit einem Reaktionsprodukt aus einer olefinischen Säure und einem Diamin zur Reaktion gebracht wird (wie im U.S.-Patent Nr. 5.981.680 an Petroff et al. beschrieben); Copolymere, die durch Reaktion von $\alpha$, $\omega$-Bis(aminoalkyl)polydimethylsiloxan mit Hydroxy-terminierten Polyamid-Vorpolymeren mit einem Molekulargewicht von 1.500 bis 3.000 hergestellt werden; Copolymere, die durch Reaktion von $\alpha$, $\omega$ -Bis(aminoalkyl)-funktionellem Polydimethylsiloxan mit aromatischen, aliphatischen oder cycloaliphatischen Diisocyanaten mit einem mittleren Molekulargewicht von beispielsweise 1.500 bis 3.000 hergestellt werden; und Copolymere von Poly(alkylenoxid) und Polydimethylsiloxan wie Poly(ethylenoxid)-Polydimethylsiloxan-Poly(ethylenoxid)-Blockcopolymere und Poly(propylenoxid)-Polydimethylsiloxan-Poly(propylenoxid)-Blockcopolymere sowie Pfropfcopolymere solcher Systeme.

Die Konzentration dieser Copolymere kann 0.5 bis 10, vorzugsweise 0.5 bis 5 Masseteile für jede 100 Masseteile

des Polyamids (A) betragen.

Organohydrido-Siliciumverbindung (D):

Die Organohydrido-Siliciumverbindung (D) ist ein Vernetzer (Vulkanisationsmittel) für das Diorganopolysiloxan (B') der vorliegenden Zusammensetzung und ist ein Organopolysiloxan, das mindestens 2 an Silicium gebundene Wasserstoffatome in jedem Molekül enthält, aber mindestens ca. 0.1 Massenprozent Wasserstoff, vorzugsweise 0.2 bis 2 und am meisten bevorzugt 0.5 bis 1.7 Prozent an Silicium gebundenen Wasserstoff aufweist. Es versteht sich natürlich für den Fachmann, dass entweder die Komponente (B') oder die Komponente (D) oder beide eine Funktionalität besitzen müssen, die größer als 2 ist, wenn das Diorganopolysiloxan (B') zu vulkanisieren ist (d. h., dass die Summe dieser Funktionalitäten im Mittel größer als 4 sein muss). Die Position des an Silicium gebundenen Wasserstoffs in der Komponente (D) ist nicht kritisch; er kann an den Molekülkettenenden, an nicht-endständigen Positionen entlang der Molekülkette oder an beiden Positionen gebunden sein. Die an Silicium gebundenen organischen Gruppen der Komponente (D) werden unabhängig ausgewählt aus einer der (nicht-Alkenyl-) Kohlenwasserstoff- oder Halogenkohlenwasserstoff-Gruppen, die oben im Zusammenhang mit dem Diorganopolysiloxan (B') beschrieben wurden, einschließlich bevorzugter Ausführungsformen davon. Die Molekülstruktur der Komponente (D) ist ebenfalls nicht kritisch; als Beispiel seien geradkettige, teilweise verzweigte geradkettige, cyclische und Netz-Strukturen genannt, wobei lineare Polymere oder Copolymer bevorzugt werden; diese Komponente sollte mit dem Diorganopolysiloxan (B') verträglich sein (d.h. sie ist bei der Vulkanisation der Komponente (B') wirksam).

Als Beispiele für die Komponente (D) seien genannt:

Siloxane mit niedrigem Molekulargewicht wie $PhSi(OSiMe_2H)_3$; Methylhydridopolysiloxane mit Trimethylsiloxy-Endblöcken; Dimethylsiloxan-Methylhydridosiloxan-Copolymere mit Trimethylsiloxy-Endblöcken; Dimethylpolysiloxane mit Dimethylhydridosiloxy-Endblöcken; Methylhydrogenpolysiloxane mit Dimethylhydrogensiloxy-Endblöcken; Dimethylsiloxan-Methylhydridosiloxan-Copolymere mit Dimethylhydridosiloxy-Endblöcken; cyclische Methylhydrogenpolysiloxane; cyclische Dimethylsiloxan-Methylhydridosiloxan-Copolymere; Tetrakis(dimethylhydrogensiloxy)silan; Siliconharze, die aus den Einheiten $(CH_3)_2HSiO_{1/2}$, $(CH_3)_3SiO_{1/2}$ und $SiO_{4/2}$ zusammengesetzt sind; und Siliconharze, die aus den Einheiten $(CH_3)_2HSiO_{1/2}$, $(CH_3)_3SiO_{1/2}$, $CH_3SiO_{3/2}$, $PhSiO_{3/2}$ und $SiO_{4/2}$ zusammengesetzt sind, wobei Me und Ph nachfolgend Methyl- beziehungsweise Phenylgruppen kennzeichnen.

Besonders bevorzugte Organohydrido-Siliciumverbindungen sind Polymere oder Copolymere, die RHSiO-Einheiten mit den Enden $R_3SiO_{1/2}$ oder $HR_2SiO_{½}$ umfassen, wobei R unabhängig ausgewählt wird aus Alkylgruppen mit 1 bis 20 Kohlenstoffatomen, Phenyl oder Trifluoropropyl, vorzugsweise Methyl. Es wird auch bevorzugt, dass die Viskosität der Komponente (D) ungefähr 0.5 bis 1.000 mPa*s bei 25 °C, vorzugsweise 2 bis 500 mPa*s beträgt. Ferner hat diese Komponente vorzugsweise 0.5 bis 1.7 Massenprozent an Silicium gebundenen Wasserstoff. Es wird insbesondere bevorzugt, dass die Komponente (D) aus einem Polymer, das im wesentlichen aus Methylhydridosiloxan-Einheiten besteht, oder einem Copolymer, das im wesentlichen aus Dimethylsiloxan-Einheiten und Methylhydridosiloxan-Einheiten besteht, ausgewählt wird und 0.5 bis 1.7 Prozent an Silicium gebundenen Wasserstoff sowie eine Viskosität von 2 bis 500 mPa*s bei 25 °C aufweist. Es versteht sich, dass ein solches besonders bevorzugtes System endständige Gruppen hat, die aus Trimethylsiloxy- oder Dimethylhdridosiloxy-Gruppen ausgewählt werden.

Die Komponente (D) kann auch eine Kombination aus zwei oder mehr der obigen Systeme sein. Die Organohydrido-Siliciumverbindung (D) wird in einer solchen Menge verwendet, dass das Molverhältnis zwischen dem darin enthaltenen SiH und dem Si-Alkenyl in der Komponente (B') größer als 1, vorzugsweise unter ca. 50, bevorzugter 3 bis 30 und am meisten bevorzugt 4 bis 20 ist.

Hydrosilylierungskatalysator (E):

Diese SiH-funktionellen Materialien sind in der Technik gut bekannt, und viele davon sind im Handel erhältlich.

Der Hydrosilylierungskatalysator (E) ist ein Katalysator, der die Vulkanisation des Diorganopolysiloxans (B') in der vorliegenden Zusammensetzung beschleunigt. Als Beispiele für diesen Hydrosilylierungskatalysator seien genannt: Platinkatalysatoren wie Platinschwarz, auf Kieselsäure getragenes Platin, auf Kohlenstoff getragenes Platin, Chlorplatinsäure, Alkohollösungen der Chlorplatinsäure, Platin-/Olefin-Komplexe, Platin-/Alkenylsiloxan-Komplexe, Platin-/beta-Diketon-Komplexe, Platin-/Phosphin-Komplexe und dergleichen; Rhodiumkatalysatoren wie Rhodiumchlorid, Rhodiumchlorid-/di(n-butyl)sulfid-Komplex und dergleichen; und Palladiumkatalysatoren wie Palladium auf Kohlenstoff, Palladiumchlorid und dergleichen. Die Komponente (E) ist vorzugsweise eine platinbasierter Katalysator wie Chlorplatinsäure; Platindichlorid; Platintetrachlorid; ein Platin-Komplex-Katalysator, der durch Reaktion von Chlorplatinsäure mit Divinyltetramethyldisiloxan hergestellt wird, das durch Polydimethylsiloxan mit Dimethylvinylsiloxy-Endblöcken verdünnt ist, hergestellt gemäß US 3.419.593 an Willing; und ein neutralisierter Komplex von Platindichlorid und Divinyltetramethyldisiloxan, hergestellt gemäß US 5.175.325 an Brown et al. Am meisten bevorzugt ist der Katalysator (E) ein neutralisierter Komplex von Platindichlorid und Divinyltetramethyldisiloxan.

Die Komponente (E) wird der vorliegenden Zusammensetzung in einer katalytischen Menge zugesetzt, die ausreicht, um die Reaktion der Komponenten (B') und (D) zu fördern und dadurch das Diorganopolysiloxan unter Bildung eines Elastomers zu vulkanisieren. Der Katalysator wird vorzugsweise so zugesetzt, dass von den Metallatomen ungefähr 0.1 bis 500 ppm, bevorzugter 0.25 bis 100 ppm (Teile je Million Teile) auf das Gesamtgewicht der Zusammensetzung des thermoplastischen Elastomers kommen.

In bevorzugten Ausführungsformen der vorliegenden Erfindung wird ein gehindertes Phenol (F) in die Formulierung einbezogen. Diese optionale Komponente ist eine organische Verbindung, die mindestens eine Gruppe mit der Struktur

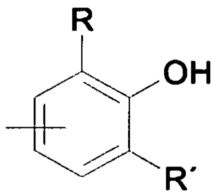

(ii)

in ihrem Molekül enthält. In der obigen Formel ist R eine Alkylgruppe mit ein bis vier Kohlenstoffatomen und R' eine Kohlenwasserstoffgruppe mit vier bis acht Kohlenstoffatomen. Für die Zwecke der vorliegenden Erfindung kann eine Gruppe gemäß der Formel (ii) an den Wasserstoff gebunden werden, um ein 1,5-Di-organophenol zu bilden. Vorzugsweise sind eine bis vier dieser Gruppen so an einen organischen Teil entsprechender Wertigkeit gebunden, dass die betrachtete Verbindung ein Molekulargewicht (MW) von unter ca. 1500 aufweist. Am meisten bevorzugt sind vier solche Gruppen in der Komponente (F) vorhanden, wobei diese Verbindung ein Molekulargewicht von unter 1200 hat. Dieser einwertige (oder mehrwertige) organische Teil kann Heteroatome wie Sauerstoff, Stickstoff, Phosphor und Schwefel enthalten. Als Beispiel für die R'-Gruppen in der obigen Formel seien t-Butyl, n-Pentyl, Butenyl, Hexenyl, Cyclopentyl, Cyclohexyl und Phenyl genannt. Sowohl R als auch R' sind vorzugsweise t-Butyl.

Zu den nicht einschränkenden spezifischen Beispielen für die Komponente (F) zählen verschiedene gehinderte Phenole, die von der Ciba Specialty Chemicals Corporation unter der Handelsbezeichnung IrganoxTM vermarktet werden:

IrganoxTM 1076 = Octadecyl-3,5-di-tert-butyl-4-hydroxyhydrocinnamat,
IrganoxTM 1035 = Thiodiethylen-bis(3,5-di-tert-butyl-4-hydroxyhydrocinnamat),
IrganoxTM MD1024 = 1,2-Bis(3,5-di-tert-butyl-4-hydroxyhydrocinnamoyl)hydrazin,
IrganoxTM 1330 = 1,3,5-Trimethyl-2,4,6-tris(3,5-di-tert-butyl-4-hydroxybenzyl)benzen,
IrganoxTM 1425 WL = Calcium-bis(monoethyl(3,5-di-tert-butyl-4-hydroxybenzyl)phosphonat) und
IrganoxTM 3114 = 1,3,5-Tris-(3,5-di-tert-butyl-4-hydroxybenzyl)-1,3,5-triazin-2,4,6(1 H,3H,5H)-trion.

Bevorzugte gehinderte Phenole sind IrganoxTM 245 {triethylenglykol-bis(3-(3'-tert-butyl-4'-hydroxy-5'-methylphenyl)propionat)}, IrganoxTM 1098 {N,N'-hexamethylen-bis(3,5-di-tert-butyl-4-hydroxyhydrocinnamamid)} und IrganoxTM 1010 {Tetrakis(methylen(3,5-di-tert-butyl-4-hydroxy-hydrocinnamat))methan}.

Vorzugsweise werden 0.1 bis 5 Masseteile des gehinderten Phenols (F) für jede 100 Masseteile des Polyamids (A) plus der Siliconbasis (B) verwendet. Vorzugsweise werden 0.1 bis 0.75, bevorzugter 0.475 bis 0.525 Masseteile von (F) für jede 100 Masseteile von (A) plus (B) zugesetzt.

Zusätzlich zu den obigen Komponenten kann man eine geringe Menge eines optionalen Additivs (G) in die Zusammensetzungen der vorliegenden Erfindung einbeziehen. Diese optionale Komponente wird vorzugsweise in einer Menge von 0.5 bis 40, bevorzugter 0.5 bis 20 Massenprozent basierend auf der Gesamtzusammensetzung zugesetzt. Als nicht einschränkende Beispiele für dieses optionale Additiv können genannt werden: Verstärkungsfüllstoffe für Polyamidharze wie Glasfasern und Kohlenstoffasern; inaktive Füllstoffe wie Quarz, Bariumsulfat, Calciumcarbonat und Diatomeenerde; Pigmente wie Eisenoxid und Titanoxid; elektrisch leitende Füllstoffe wie Carbon Black und feinteilige Metalle; wärmebeständige Stabilisatoren wie Ceroxid-Hydrate; Antioxidantien; Flammschutzmittel wie Halogenkohlenwasserstoffe, Aluminiumtrihydroxid, Magnesiumhydroxid und Phosphor-organische Verbindungen; und andere feuerhemmende (FR) Materialien. Ein bevorzugtes FR-Additiv ist Calciumsilicat-Feststoff, vorzugsweise ein Wollastonit mit einer mittleren Partikelgröße von 2 bis 30 μm. Ferner kann die optionale Komponente (G) ein Weichmacher für die Siliconkautschuk-Komponente - beispielsweise ein Polydimethylsiloxan-Öl - und/oder ein Weichmacher für die Polyamid-Komponente sein. Zu den Beispielen für letzteren zählen Phthalatester wie Dicyclohexylphthalat, Dimethylphthalat,

Dioctylphthalat, Butylbenzylphthalat und Benzylphthalat; Trimellitatester wie C1-C9-Alkyltrimellitat; Sulfonamide wie N-cyclohexyl-p-toluolsulfonamid, N-ethyl-o,p-toluolsulfonamid und o-Toluolsulfonamid, und flüssige oligomere Weichmacher. Bevorzugte Weichmacher sind geringflüchtige Flüssigkeiten, die die Weichmacheremissionen bei den üblichen Schmelztemperaturen von Polyamiden minimieren.

Die obigen Additive werden normalerweise nach der dynamischen Vulkanisation der endgültigen thermoplastischen Zusammensetzung zugesetzt, können jedoch auch zu irgendeinem Zeitpunkt bei der Herstellung zugegeben werden, vorausgesetzt, dass sie den dynamischen Vulkanisationsmechanismus nicht stören. Die oben genannten zusätzlichen Inhaltsstoffe werden selbstverständlich nur in Mengen eingesetzt, die die gewünschten Eigenschaften der endgültigen Zusammensetzung nicht wesentlich beeinträchtigen.

Gemäß dem Verfahren der vorliegenden Erfindung kann das zur Beschichtung der in den erfindungsgemäßen Lackformulierungen eingesetzen Siliciumdioxide verwendete thermoplastische Elastomer hergestellt werden, indem die Siliconbasis (B) und der Verträglichkeitsvermittler (C) sorgfältig im Polyamid (A) dispergiert werden und das Diorganopolysiloxan unter Einsatz der Organohydrido-Siliciumverbindung (D) und des Katalysators (E) dynamisch in der Basis vulkanisiert wird. Für die Zwecke der vorliegenden Erfindung ist das Massenverhältnis zwischen der Siliconbasis (B) und dem Polyamidharz (A) größer als 35 : 65. Es wurde festgestellt, dass, wenn dieses Verhältnis 35 : 65 oder darunter beträgt, das resultierende Vulkanisat im allgemeinen einen Modul aufweist, der eher dem des Polyamidharzes als dem des thermoplastischen Elastomers ähnelt. Andererseits sollte das obige Verhältnis nicht höher als ungefähr 85 : 15 sein, da die Zusammensetzungen dann dazu neigen, schwach zu sein, und vulkanisierten Siliconelastomeren oberhalb dieses Wertes ähneln. Ungeachtet dieser Obergrenze ist das maximale Verhältnis von (B) zu (A) für irgendeine vorgegebene Kombination von Komponenten auch durch Überlegungen bezüglich der Verarbeitbarkeit eingeschränkt, da ein zu hoher Siliconbasis-Gehalt zu einer zumindest teilweise vernetzten zusammenhängenden Phase führt, die nicht mehr thermoplastisch ist. Diese praktisch bedingte Grenze wird für die Zwecke der vorliegenden Erfindung einfach durch Routineversuche festgestellt und stellt die größte Menge der Komponente (B) dar, mit der das TPSiV formgepresst werden kann. Es wird jedoch bevorzugt, dass das endgültige thermoplastische Elastomer auch leicht in anderen üblichen Kunststoffprozessen wie beispielsweise Spritzgießen und Strangpressen verarbeitet werden kann, und in diesem Fall sollte das Massenverhältnis der Komponenten (B) und (A) nicht höher als ca. 75 : 25 sein. Ein solches bevorzugtes thermoplastisches Elastomer, das später wiederverarbeitet wird, hat oft eine Zugfestigkeit und Reißdehnung, die innerhalb 10% der entsprechenden Werte des ursprünglichen TPSiVs liegen (d.h., dass das thermoplastische Elastomer durch die Wiederverarbeitung wenig verändert wird). Obwohl die mit dem obigen Verfahren vereinbare Siliconbasis-Menge von dem spezifischen Polyamidharz und anderen ausgewählten Komponenten abhängt, beträgt das Massenverhältnis zwischen den Komponenten (B) und (A) vorzugsweise 40 : 60 bis 75 : 25, bevorzugter 40 : 60 bis 70 : 30.

Das Vermischen wird in irgendeiner Vorrichtung durchgeführt, mit der sich die Komponenten gleichmäßig im Polyamidharz dispergieren lassen, beispielsweise in einem Innenmischer oder einem Doppelschneckenextruder, wobei letzterer für großtechnische Herstellungen bevorzugt wird. Die Temperatur wird vorzugsweise so niedrig wie bei guter Vermischung praktisch möglich gehalten, damit das Harz nicht beeinträchtigt wird. Je nach dem speziellen System ist die Reihenfolge beim Mischen normalerweise nicht kritisch, so dass man beispielsweise die Komponenten (A), (C), (D) und - optional - (F) bei einer Temperatur über dem Erweichungspunkt von (A) (d.h. Schmelzpunkt oder Glasübergangstemperatur) zu (B) hinzugeben kann, wobei der Katalysator (E) dann eingeführt wird, um die dynamische Vulkanisation zu in Gang zu setzen. Die Komponenten (B) bis (F) sollten allerdings gut im Harz (A) dispergiert sein, bevor die dynamische Vulkanisation anfängt. Wie bereits gesagt, versteht es sich auch, dass man die Siliconbasis vor Ort bilden kann. Der Verstärkerfiillstoff kann beispielsweise in einen Mischer gefüllt werden, der bereits das Polyamidharz und den Diorganopolysiloxan-Kautschuk bei einer Temperatur unter dem Erweichungspunkt des Harzes enthält, um den Füllstoff gründlich im Kautschuk zu dispergieren. Die Temperatur wird dann zum Schmelzen des Harzes erhöht, die anderen Inhaltsstoffe werden zugesetzt und die Vermischung/dynamische Vulkanisation wird durchgeführt. Die optimalen Temperaturen, Mischzeiten und anderen Bedingungen des Mischvorgangs hängen von dem spezifischen Harz und den anderen betrachteten Komponenten ab und können durch Routineversuche von Fachleuten ermittelt werden. Das Vermischen und die dynamische Vulkanisation werden vorzugsweise jedoch unter einer trockenen, inerten Atmosphäre (d.h. einer Atmosphäre, die keine nachteiligen Reaktionen mit den Komponenten bewirkt oder sonst die Hydrosilylierungs-Vulkanisation stört) wie beispielsweise trockenem Stickstoff, Helium oder Argon durchgeführt.

Wie oben angemerkt, müssen die für das TPSiV-Elastomer geltende Zugfestigkeit oder Reißdehnung oder beide mindestens 25 % größer sein als die einer entsprechenden einfachen Mischung, um innerhalb des Umfangs der vorliegenden Erfindung zu bleiben. Eine weitere Anforderung der Erfindung besteht darin, dass das TPSiV mindestens 25 % Reißdehnung aufweist, wie bei der unten beschriebenen Prüfung festgestellt wurde. In diesem Zusammenhang bezeichnet der Begriff "einfache Mischung" (oder physikalische Mischung) eine Zusammensetzung, bei der die Massenproportionen von Harz (A), Basis (B) und Verträglichkeitsvermittler (C) mit den Proportionen im TPSiV identisch sind, dafür aber keine Vulkanisationsmittel eingesetzt werden (d.h., dass entweder die Komponente (D) oder (E) oder beide weggelassen werden und der Kautschuk demzufolge nicht vulkanisiert wird). Um festzustellen, ob eine spezifische Zusammensetzung das obige Kriterium erfüllt, wird die Zugfestigkeit des TPSiVs nach der ASTM-Methode D 412 mit

einer Verlängerungsrate von 50 mm/min an hantelförmigen Probekörpern gemessen, die 25.4 mm lang und 3.2 mm breit sind und eine typische Dicke von 1 bis 2 mm aufweisen. Es werden mindestens drei dieser Prüfkörper bewertet und die Ergebnisse gemittelt, nachdem die durch Inhomogenität der Probekörper (z.B. Leerräume, Verunreinigung oder Einschlüsse) bedingten offensichtlich zu niedrigen Werte ausgeschlossen wurden. Diese Ergebnisse werden dann mit den entsprechenden Mittelwerten für Zugfestigkeit und Reißdehnung eines Probekörpers verglichen, der aus der Zusammensetzung der einfachen Mischung hergestellt wurde. Falls gegenüber der einfachen Mischung nicht mindestens eine 25%ige Verbesserung der Zugfestigkeit und/oder Reißdehnung erzielt wird, lässt sich aus der dynamischen Vulkanisation kein Vorteil ableiten; solche TPSiVs sind dann nicht innerhalb des Umfangs der vorliegenden Erfindung. Details der zuvor beschriebenen thermoplastischen Elastomere sowie des Verfahrens zu ihrer Herstellung können der US 6,362,288 entnommen werden. Der Inhalt dieser Patentschrift wird ausdrücklich in den Inhalt der vorliegenden Beschreibung einbezogen.

Das mit dem oben beschriebenen Verfahren hergestellte thermoplastische Elastomer kann durch übliche Methoden wie Strangpressen, Vakuumformen, Spritzgießen, Blasformen, Mehrkomponenten-Spritzgießen oder Formpressen verarbeitet werden. Darüber hinaus kann man diese Zusammensetzungen mit geringfügiger oder keiner Beeinträchtigung der mechanischen Eigenschaften wiederverarbeiten (recyceln).

Die erfindungsgemäßen Lackformulierungen enthalten besonders bevorzugt Siliciumdioxide, deren Oberfläche mit dem thermoplastischen Elastomer Dow Corning 33 Additive (Fa. Dow Corning, Techn. Datenblatt v. 25.02.2003) beschichtet ist.

Die in den erfindungsgemäßen Lackformulierungen eingesetzten oberflächenmodifizierten Siliciumdioxide können unabhängig voneinander einen oder mehrere der nachfolgenden physikalisch-chemischen Parameter aufweisen.

| | |
|---|---|
| Kohlenstoffgehalt: | 0.5 - 30 %, bevorzugt 1 - 20 %, insbesondere 2-10 % |
| DBP (wasserfrei): | 100 - 600 g/100g, bevorzugt 200 - 450 g/100 g, insbesondere 250 - 380 g/100g |
| Mittlere Partikelgröße $d_{50}$: | 0.5 - 50 μm, bevorzugt 1-30 μm, insbesondere 2-20 μm |
| pH-Wert: | < 8 |

Die zuvor beschriebenen und in den erfindungsgemäßen Lackformulierungen enthaltenen oberflächenmodifizierten Siliciumdioxide können durch Oberflächenbehandlung handelsüblicher oder nach bekannten Verfahren herstellbarer Sliziumdioxide mit den zuvor genannten Polymeren hergestellt werden. Die Oberflächenbehandlung kann dabei nach an sich bekannten Methoden erfolgen.

Es ist zum Beispiel möglich, handelsübliche Siliciumdioxide, z. B. Mattierungsmittel der Fa. Grace (Syloid ED 2, Syloid ED 3, Syloid ED 5, Syloid C 805, Syloid C 807, Syloid C 809, Syloid C 812), der Fa. Ineos (HP 260, HP 270, HP 285, HP 39, HP 395), der Fa. Silysia (Sylysia 350, Sylysia 370, Sylysia 270) oder der Fa. Degussa AG mit einem der zuvor genannten Polymere zu vermischen und bei Raumtemperatur oder erhöhter Temperatur zu belegen.

Weiterhin ist es möglich, die Belegung der Kieselsäure mit dem Elastomer während der Herstellung der Kieselsäure durchzuführen. So kann das Elastomer z. B. in die Fällsuspension des Siliciumdioxids zugegeben werden. Es ist aber auch möglich, das Siliciumdioxid zusammen mit dem Elastomer in einem Sprühtrockner einzusprühen und die Oberflächenmodifizierung während der Trocknung durchzuführen. Schließlich ist es auch möglich, die Belegung des Siliciumdioxids nach der Trocknung, z. B. während der Vermahlung der Kieselsäure durchzuführen. Wie bereits ausgeführt sind Verfahren zur Modifizierung von Siliciumdioxiden dem Fachmann bekannt bzw. bekannte Verfahren können leicht durch den Einsatz der entsprechenden Elastomeren abgewandelt werden. So sind die zuvor aufgezählten Verfahrensvarianten nicht vollständig. Es ist möglich, die Oberflächenmodifizierung nach weiteren Verfahren durchzuführen. Details zu entsprechend anwendbaren Oberflächenmodifizierungsverfahren können der EP 1281733 A1 entnommen werden. Der Inhalt dieser Anmeldung wird hiermit ausdrücklich in den Gegenstand der Beschreibung der vorliegenden Anmeldung einbezogen.

Besonders bevorzugte oberflächenmodifizierte Siliciumdioxide werden in der PCT/EP03/12380; PCT/EP03/12381 sowie in der europäischen Patentanmeldung Nummer EP 02 02 8310.7 beschrieben. Der Inhalt dieser Patentanmeldungen wird hiermit ausdrücklich in den Inhalt der Erfindung einbezogen.

Die erfindungsgemäßen Lackformulierungen können nach allen dem Fachmann bekannten Verfahren hergestellt werden

Die erfindungsgemäßen Lackformulierungen werden bevorzugt für die Beschichtung von Kunststoffen und natürlichen sowie künstlichen Ledern, insbesondere solchen, die für die Innenausstattung von Automobilen eingesetzt werden, verwendet. Sie werden bevorzugt als Klarlack eingesetzt.

## Meßmethoden

Die physikalisch/chemischen Daten der erfindungsgemäßen Lackformulierungen und der darin eingesetzten Siliciumdioxide werden mit den folgenden Methoden bestimmt:

**Bestimmung der Stampfdichte**

Die Bestimmung der Stampfdichte erfolgt in Anlehnung an DIN EN ISO 787-11.
Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.

Die Messungen werden auf einem Stampfvolumeter mit Zählwerk der Fa. Engelsmann, Ludwigshafen, Typ STAV 2003, durchgeführt.

Zunächst wird ein 250 ml Glaszylinder auf einer Präzisionswaage tariert. Anschließend werden 250 ml des Siliciumdioxids mit Hilfe eines Pulvertrichters so in den tarierten Messzylinder eingefüllt, dass sich keine Hohlräume bilden. Anschließend wird die Probenmenge auf 0,01 g genau gewogen. Danach wird leicht an den Zylinder geklopft, so dass die Oberfläche des Pulvers im Zylinder waagrecht ist. Der Messzylinder wird in den Messzylinderhalter des Stampfvolumeters eingesetzt und 1250 mal gestampft. Das Volumen der gestampften Probe wird nach einmaligem Stampfdurchgang auf 1 ml genau abgelesen. Die Stampfdichte D(t) berechnet sich wie folgt:

$$D(t) = m * 1000 / V$$

D(t): Stampfdichte [g/l]
V: Volumen des Siliciumdioxids nach dem Stampfen [ml]
m: Masse des Siliciumdioxids [g]

**Bestimmung des Trocknungsverlusts (TV)**

Die Feuchte oder auch Trocknungsverlust (TV) von Siliciumdioxiden wird in Anlehnung an ISO 787-2 nach 2-stündiger Trocknung bei 105 °C bestimmt. Dieser Trocknungsverlust besteht überwiegend aus Wasserfeuchtigkeit.

In ein trockenes Becherglas werden auf einer Präzisionswaage (Satorius LC621 S) 10 g des pulverförmigen Siliciumdioxids auf 0.1 mg genau eingewogen (Einwaage E). Das Becherglas wird mit Aluminiumfolie abgedeckt, in die mehrere Löcher (Ø) 1 mm) gebohrt sind. Das so abgedeckte Becherglas wird 2 h bei 105 °C in einem Trockenschrank getrocknet. Anschließend kühlt das heiße Becherglas in einem Exsikkator über Trockenmittel für mindestens eine Stunde auf Raumtemperatur ab.

Das Becherglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

**Bestimmung des Glühverlusts (GV)**

Nach dieser Methode wird der Gewichtsverlust von Siliciumdioxiden in Anlehnung an DIN EN ISO 3262-1 bei 1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung des Trocknungsverlusts" in Anlehnung an DIN EN ISO 787-2 ermittelt.

0.5 g des Siliciumdioxids werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Silicagel als Trocknungsmittel auf Raumtemperatur abgekühlt. Die Auswaage A wird gravimetrisch bestimmt.

Man erhält den Glühverlust GV in % gemäß

$$GV=(1 - A / F) * 100.$$

F ist die korrigierte Einwaage bezogen auf getrocknete Substanz in g und errechnet sich nach

$$F = E * (1 - TV / 100).$$

In den Berechnungen bedeuten A = Auswaage in g, E = Einwaage in g und TV = Trocknungsverlust in %.

**Bestimmung des Kohlenstoffgehalts (C%)**

Die Bestimmung des Kohlenstoffgehaltes von Siliciumdioxiden erfolgt mit dem "C-mat 500" (Fa. Ströhlein Instruments). Die Proben werden bei ca. 1350 °C getempert und der Kohlenstoff durch einen Sauerstoffstrom zu $CO_2$ oxidiert. Das $CO_2$ wird in einer Infrarotzelle gemessen.

Bei den Messungen wird unterschieden, ob der Kohlenstoffgehalt größer oder kleiner als 1 Prozent beträgt. Liegt der Kohlenstoffgehalt der homogenen Kieselsäureproben oberhalb 1 Prozent, wird im "High"-Bereich des Gerätes gemessen, liegt er unterhalb von 1 Prozent, wird im "Low"-Bereich gemessen.

Zuerst wird die Kontrollprobe gemessen. Dazu werden auf ein ausgeglühtes, auf Raumtemperatur abgekühltes Porzellanschiffchen 0.14-0.18 g der Kontrollprobe auf einer Analysenwaage eingewogen. Beim Bedienen der Starttaste wird das Gewicht übernommen, da die Waage mit dem "C-mat" gekoppelt ist. Das Schiffchen muss innerhalb 30 Sekunden in die Mitte des Verbrennungsrohres geschoben werden. Nach Abschluss der Verbrennung wird der Messwert in Impulse umgewandelt und vom Rechner ausgewertet. Es werden mindestens 3 Bestimmungen (je nach Übereinstimmung) durchgeführt. Eventuell muss der Faktor des Gerätes neu eingestellt werden (Details siehe Bedienungsanleitung "C-mat 500", Firma Ströhlein Instruments). Dieser Faktor wird nach folgender Formel berechnet:

$$Faktor = \frac{Sollwert(Standard) * Einwaage(Standard)\ in\ g * 10^{8}}{Impulse}$$

Anschließend werden die Siliciumdioxide gemessen. Die Einwaage beträgt 0.04 - 0.05 g. Das Porzellanschiffchen wird mit einem Porzellandeckel abgedeckt. Bei Abweichungen > 0.005 % werden mehr Messungen durchgeführt und der Durchschnitt errechnet.

Die Handhabung des "C-mat 500" wird der Bedienungsanleitung der Firma Ströhlein Instruments entnommen.

Der Kohlenstoffgehalt wird wie folgt berechnet und in der Einheit % angegeben:

$$\text{Kohlenstoffgehalt} = (1 * F * 10^{-8}) / E$$

I = Impuls
F = Faktor
E = Einwaage in g

**Bestimmung des pH-Wertes (pH)**

Das Verfahren in Anlehnung an DIN EN ISO 787-9 dient zur Bestimmung des pH-Wertes einer wässrigen Suspension von Siliciumdioxiden bei 20 °C.

Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00).

5.00 g des pulverförmigen Siliciumdioxids mit 4 ± 2 % Feuchtegehalt werden auf einer Präzisionswaage auf 0.01 g genau in eine zuvor tarierte Glas-Weithalsflasche eingewogen. Es wird bis zur 100 ml Markierung mit 20 °C kaltem, entionisiertem Wasser aufgefüllt. Sollten die untersuchten Proben nicht ausreichend wasserbenetzbar sein, so wird bis zur 100 ml-Markierung mit 50.0 ml Methanol p.A. und 50.0 ml entionisiertem Wasser aufgefüllt

Anschließend wird die Suspension im verschlossenen Gefäß für die Dauer von 5 Minuten mittels einer Schüttelmaschine (Fa. Gerhardt, Modell LS10, 55 W, Stufe 7) bei 20 °C geschüttelt. Die Messung des pH-Wertes erfolgt direkt im Anschluss. Dazu wird die Elektrode zunächst mit entionisierten Wasser, nachfolgend mit einem Teil der Suspension

abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

**Bestimmung der DBP-Aufnahme (DBP)**

Die DBP-Aufnahme (DBP-Zahl), die ein Maß für die Saugfähigkeit von Siliciumdioxiden ist, wird in Anlehnung an die Norm DIN 53601 wie folgt bestimmt:

12.50 g des pulverförmigen Siliciumdioxids (Feuchtegehalt 4 ± 2 %) werden in die Kneterkammer (Artikel Nummer 279061) des Brabender-Absorptometer "E" gegeben (ohne Dämpfung des Ausgangsfilters des Drehmomentaufnehmers). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/100g angegeben und anhand der folgenden Formel berechnet:

$$DBP = \frac{V * D * 100}{E} * \frac{g}{100g} + K$$

mit

DBP = DBP-Aufnahme in g/100 g
V = Verbrauch an DBP in ml
D = Dichte von DBP in g/ml (1.047 g/ml bei 20 °C)
E = Einwaage an Siliciumdioxid in g
K = Korrekturwert gemäß Feuchtekorrekturtabelle in g/100 g

Die DBP-Aufnahme ist für wasserfreie, getrocknete Siliciumdioxide definiert. Bei Verwendung von feuchten Siliciumdioxiden ist der Korrekturwert K für die Berechnung der DBP-Aufnahme zu berücksichtigen. Dieser Wert kann anhand der Feuchtekorrekturtabelle ermittelt werden, z. B. würde ein Wassergehalt des Siliciumdioxids von 5.8 % einen Zuschlag von 33 g/100 g für die DBP-Aufnahme bedeuten. Die Feuchte der Siliciumdioxide wird gemäß der beschriebenen Methode "Bestimmung des Trocknungsverlusts" ermittelt.

Feuchtekorrekturtabelle für Dibutylphthalataufnahme -wasserfrei-

| | .% Wasser | | | | |
|---|---|---|---|---|---|
| % Wasser | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung des 60°- und 85°-Reflektometerwerts**

Die Beeinflussung des Reflektionsvermögens durch gezielte Aufrauhung von Lackfilmoberflächen ist die herausragende Eigenschaft von Mattierungsmitteln auf Basis von $SiO_2$. Der Reflektometerwert ist somit ein wichtiges Kriterium zur Charakterisierung von mattierten Lackfilmen.

Voraussetzung für die Messung ist, dass die zu messenden Lackfilmoberflächen plan, sauber und ausgehärtet sind.

Die Messung ist an mindestens 3 repräsentativen Stellen der Probe mittels eines Reflektometers mit Messgeometrie nach DIN 67530 (z.B. Haze-gloss, BYK-Instruments) durchzuführen. Werden zu große Abweichungen der Einzelmessungen erzielt, sollte in der Regel eine erneute Messung an repräsentativen Stellen erfolgen oder die Anzahl der Einzelmessungen auf > 3 erhöht werden. Am BYK haze-gloss wird im Display die Standardabweichung der Messungen angezeigt. Ist die Standard-abweichung s > 0.5, ist die Durchführung der o. g. Maßnahmen zu empfehlen. Der Mittelwert ist auf 1 Dezimalstelle anzugeben.

Bei der Charakterisierung von mattierten Lackfilmoberflächen hat es sich bewährt, mit der 60°- und der 85°-Messgeometrie zu messen. In der Abweichung von DIN 67530 werden deshalb die Reflektometerwerte mattierter Lackfilmoberflächen mit beiden Messgeometrien bestimmt.

**Bestimmung der Transparenz als Schwarzzahl $M_y$**

Die Bestimmung der Schwarzzahl $M_y$ erfolgt in Anlehnung an DIN 55979 mittels des Messgeräts Pausch Q-Color 35.

Zuvor wird der zu untersuchenden Klarlack gemäß den Rezepturen 1 oder 2 hergestellt und gegebenenfalls mit einem Siliciumdioxid mattiert. Dieser Lack wird mittels eines 60 µm-Spaltrakels auf eine hochglänzende schwarz eingefärbte Glasplatte (Format 180 x 80 x 60 mm, Art.Nr. P 2071035, Hersteller, Berliner Glas KG, Herbert Kubatz GmbH & Co.) aufgebracht (Aufbringungsgeschwindigkeit 25 mm/s mittels Coatmaster 509 MC, Fa. Erichsen). Anschließend werden die Lackproben 1 h in einem Umlufttrockenschrank bei 80 °C getrocknet.

Die Messung der Schwarzzahl $M_y$ an der so vorbereiteten Glasplatte erfolgt nach DIN 55979.

Der Wert $M_y$ gibt eine Aussage über die Farbtiefe und Transparenz des Klarlacks. Je höher dieser Wert ist, um so transparenter ist der Lack. Gleichzeitig nimmt die Farbtiefe zu. Es ist zu beachten, dass der Lack so mattiert sein muss, dass sich vergleichbare 60°-Reflektometerwerte ergeben. Nur dann lassen sich die Werte für die Schwarzzahl $M_y$ vergleichen.

**Bestimmung des Soft-Feel-Effekts**

Beim Soft-Feel-Effekt handelt es sich um eine haptische Größe, die nur subjektiv durch Berührung beurteilt werden kann. Durch Streichen und Fühlen mit der Hand und den Fingerkuppen über die zu prüfenden Lackoberflächen wird das persönliche Empfinden der haptischen Eigenschaften beurteilt. Dazu werden Noten von 1 bis 5 folgendermaßen vergeben:

1= plastikartige, harte Oberfläche (kein Soft-Feel-Effekt)
2 = lackartige, glatte Oberfläche
3 = spürbare Änderung der Oberfläche zu seidenartigem Charakter (geringer Soft-Feel-Effekt)
4 = gummi-, lederartige Oberfläche (ausgeprägter Soft-Feel-Effekt)
5 = samtige Oberfläche (stark ausgeprägter Soft-Feel-Effekt)

**Bestimmung der Auslaufzeit**

Als Auslaufzeit wird die Zeit bezeichnet, die ein festgelegtes Volumen eines flüssigen Mediums benötigt, vollständig aus einem genormten Auslauf-Becher (DIN-Becher 4 mm nach DIN 53211 mit Stativ) zu fließen.

Die Temperatur des Lackes und des DIN-Bechers 4 mm muss vor und beim Messen der Auslaufzeit 23°C ± 0,5°C betragen.

Der DIN-Becher 4 mm wird an dem Stativ so befestigt, dass seine Oberkante waagerecht ausgerichtet ist. Die Auslaufdüse wird mit einem Finger verschlossen, und der von Blasen und Verunreinigungen freie Lack wird so in den DIN-Becher 4 mm gefüllt, dass die Flüssigkeit über die Innenkante des Becherrandes läuft. Beim Füllen dürfen keine Luftblasen in die Probe gelangen. Dann wird mit einer Glasplatte oder einem Kartenblatt über den Rand überstehender Lack abgestrichen.

Gleichzeitig mit der Freigabe der unteren Öffnung der Auslaufdüse beginnt die Messung der Auslaufzeit; sie wird beendet, sobald der Flüssigkeitsfaden unter der Auslaufdüse zum ersten Mal abreißt.

Die Auslaufzeit wird mit einer Genauigkeit von 1 sec angegeben.

**Beispiele**

Die folgende Beispiele sollen die Erfindung näher erläutern, ohne ihren Umfang zu beschränken.
Für die nachfolgend beschriebenen anwendungstechnischen Untersuchungen werden folgende Siliciumdioxide verwendet:

**Siliciumdioxide des Standes der Technik:**

Siliciumdioxid 1: Pergopak M 3 (Fa. Albemarle, Techn. Datenblatt v. 12/2002) gemischt mit Acematt OK 412 (Fa. Degussa AG, Techn. Datenblatt v. 12/2002) im Gewichtsverhältnis 3:1 (s. Bayer AG, Broschüre "Wässrige Soft-feel-Lackierungen für Kunststoffe mit Bayhydrol® Bayhydur® /Desmodur® , LS 5800, S. 10, 06/2003)

**Erfindungsgemäße, oberflächenmodifizierte Siliciumdioxide**

Siliciumdioxid 2:

Zur Herstellung von Siliciumdioxid 2 werden eingesetzt:
Die hydrophile pyrogene Kieselsäure (Aerosil 300) mit folgenden physikalisch-chemischen Eigenschaften:

| | |
|---|---|
| Spezifische Oberfläche nach BET [$m^2/g$]: | 290.0 |
| pH-Wert: | 4.2 |
| Stampfdichte [g/l]: | 35 |
| Trocknungsverlust [%]: | 0.8 |
| DBP, wasserfrei [g/100g]: | 305.0 |
| C-Gehalt [%]: | 0 |

Das Coatungsmittel (TEGO Foamex 845, Firma TEGO GmbH, Techn. Datenblatt v. 01/2004)), eine Polysiloxan-Emulsion, weist die folgenden physikalisch-chemischen Eigenschaften auf:

| | |
|---|---|
| Form: | thixotrope Flüssigkeit |
| Farbe: | weiß |
| Geruch: | schwacher Eigengeruch |
| Siedetemperatur: | ca. 100 °C |
| Dichte: | ca. 1 g/$cm^3$ (bei 20 °C ) |
| Wasserlöslichkeit: | mischbar |
| pH-Wert: | 5 — 8 (bei 20 °C im Original) |

Das Coatungsmittel besteht aus 656.4 g einer wässrigen Polysiloxan-Emulsion, die mit 210 g Wasser verdünnt wird. Der pH-Wert des Coatungsmittels wird durch Zugabe von $NH_4OH$ auf pH 11.3 eingestellt. Auf 2 kg der pyrogenen Kieselsäure werden 0.865 kg Coatungsmittels bei Raumtemperatur mit einer Zweistoffdüse aufgesprüht. Als Mischgefäß wird ein Pflugscharmischer verwendet. Der Trocknungsverlust des so befeuchteten Materials liegt bei 24.4 %.
Auf einer Gasstrahlmühle wird das befeuchtete Material vermahlen (Durchsatz: 7 kg/h) und anschließend 13 h bei 120 °C getrocknet.

Siliciumdioxid 3:

Eingesetzt wird die hydrophile pyrogene Kieselsäure (Aerosil 300) mit folgenden physikalischchemischen Eigenschaften:

| | |
|---|---|
| Spezifische Oberfläche nach BET [$m^2$/g]: | 290.0 |
| pH-Wert: | 4.2 |
| Stampfdichte [g/l]: | 35 |
| Trocknungsverlust [%]: | 0.8 |
| DBP-Zahl [%]: | 305.0 |
| C-Gehalt [%]: | 0 |

Eingesetzt wird folgendes Mittel zur Oberflächenmodifizierung (Dow Corning DY 33 Additive, Produktdatenblatt vom 25.02.2003), bei dem es sich um ein Siliconelastomer mit Epoxyfunktionen handelt:

| | |
|---|---|
| Erscheinungsbild: | weiße, wässrige Flüssigkeit |
| Mittlere Teilchengröße: | 2-4 µm |
| Viskosität: | 40 - 200 mPas |
| Feststoffgehalt: | 50 |
| Suspensions-Typ: | anionisch |
| Härte des Feststoffs: (Shorehärte A) | 70 |

Das Mittel zur Oberflächenmodifizierung wird als 50%ige, wässrige Suspension eingesetzt, deren pH-Wert durch Zugabe von $NH_4OH$ auf pH 10.5 eingestellt wird. Auf 2 kg der pyrogenen Kieselsäure werden 0.909 kg des Mittels zur Oberflächenmodifizierung bei Raumtemperatur mit einer Zweistoffdüse aufgesprüht. Als Mischgefäß wird ein Pflugscharmischer verwendet. Der Trocknungsverlust des so befeuchteten Materials liegt bei 15.9 %.

Auf einer Gasstrahlmühle wird das befeuchtete Material vermahlen (Durchsatz: 7 kg/h) und anschließend 13 h bei 120 °C getrocknet.

Die Siliciumdioxide 2 und 3 weisen die in Tabelle 1 aufgeführten folgenden physikalischchemischen Parameter auf:

**Tabelle 1:**

| | organ. Mod. | Stampfdichte g/l | TV % | GV % | C% % | pH | DBP (wasserfrei) g/100g |
|---|---|---|---|---|---|---|---|
| Siliciumdioxid 2 erfindungsgemäß) | Polysiloxan | 24 | 1.6 | 4.9 | 3.0 | 6.5 | 323 [1)] |
| Siliciumdioxid 3 (erfindungsgemäß) | Polysiloxan-elastomer | 23 | 1.4 | 6.2 | 5.4 | 5.6 | 322 [2)] |

[1)] DBP (Original) = 310 g/100g

[2)] DBP (Original) = 310 g/100g

**Anwendungsbeispiel 1: 1-Komponenten-Soft-Feel-Lack**

Es wird ein Lack entsprechend der Rezeptur 1 hergestellt. Dazu wird der Rohstoff der Pos. 1 in einem 5 1-Edelstahlbehälter (Durchmesser 185 mm) vorgelegt. Unter Rühren mit einem Dissolver (Durchmesser der Dissolverscheibe 80 mm) bei 1000 U/min werden die Rohstoffe der Pos. 2 und 6 zugegeben. Anschließend wird noch 10 min bei 1500 U/min dispergiert.

Zu 100 g des so hergestellten Lacks wird Siliciumdioxid gegeben. Die Einwaage an Siliciumdioxid wird so gewählt, dass alle Proben vergleichbare 60°-Reflektometerwerte von 0 bis 3 aufweisen, da ein Vergleich der Transparenz nur bei gleichem Glanz möglich ist (Einwaage s. Tabelle 2). Nach Zugabe wird 10 min bei 2000 U/min mit einem Dissolver (Durchmesser der Dissolverscheibe 45 mm) dispergiert.

Danach wird die Spritzviskosität des Lackes durch weiter Einarbeitung von VE-Wasser auf eine Auslaufzeit von 21 s eingestellt. Nach Entlüften erfolgt die Spritzapplikation des Lackes (1.5 Kreuzgänge = dreimaliges Besprühen der Platte in vertikaler Richtung und anschließende Drehung der Platte um 90°) auf Kunststoffplatten, die aus Bayblend T 65 (Fa. Bayer AG, Techn. Datenblatt v. 25.02.2004) bestehen.

Die Transparenz als Schwarzzahl $M_y$, der Glanz und der Soft-Feel-Effekt werden bestimmt.

**Rezeptur 1:**

| Pos. | | Einwaage in g |
|---|---|---|
| 1 | U 420 (Fa. Alberdingk, Techn. Datenblatt v. 11.02.2003) | 3160.0 |
| 2 | BYK 346 (Fa. Byk-Chemie, Techn. Datenblatt v. 11/2003) | 40.0 |
| 3 | BYK 24 (Fa. Byk-Chemie, Techn. Datenblatt v. 05/2004) | 26.0 |
| 4 | Dow Corning 67 (Fa. Dow Coming, Techn. Datenblatt v. 07.08.2000) | 22.0 |
| 5 | Butylglykol | 152.0 |
| 6 | Deionisiertes Wasser | 600.0 |
| | **Summe** | **4000.0** |

Die Ergebnisse sind in Tabelle 2 zusammengefasst

**Tabelle 2:**

| Lackformulierung mit | Coatungsmittel für $SiO_2$ | Einwaage in g | 60°-Reflektometerwert | Schwarzzahl $M_y$ | Soft-Feel-Effekt |
|---|---|---|---|---|---|
| Siliciumdioxid 1 (Stand der Technik) | PE-Wachs | 8.0 | 0.5 | 138 | 1 |
| Siliciumdioxid 2 (gem. Erfindung) | Polysiloxan | 6.0 | 0.7 | 148 | 4 |
| Siliciumdioxid 3 (gem. Erfindung) | Polysiloxan-elastomer | 6.0 | 0.7 | 145 | 5 |

**Anwendungsbeispiel 2: 2-Komponenten-Lack**

Ein Lack wird gemäß Rezeptur 2 hergestellt. Die Rohstoffe der Pos. 1 und 2 werden in einem 51-Edelstahlbehälter (Durchmesser 185 mm) vorgelegt und mit einem Dissolver (Durchmesser der Dissolverscheibe 80 mm) 5 min bei 2000 U/min dispergiert. Danach wird die Komponente 3 zugegeben und wieder 5 min bei 2000 U/min dispergiert. Zuletzt werden die Komponenten 4 und 5 zugegeben und erneut 5 min bei 2000 U/min dispergiert.

Zu 100 g des so hergestellten Lacks wird Siliciumdioxid gegeben. Die Einwaage an Siliciumdioxid wird so gewählt, dass alle Proben vergleichbare 60°-Reflektometerwerte von 0 bis 3 aufweisen, da ein Vergleich der Transparenz nur bei gleichem Glanz möglich ist (Einwaage s. Tabelle 3). Nach Zugabe wird 10 min bei 2000 U/min mit einem Dissolver (Durchmesser der Dissolverscheibe 45 mm) dispergiert. Anschließend wird der Härter, Desmodur N 3390 (Fa. Bayer AG, Techn. Datenblatt v. 01.01.2001) zugegeben und 1 min bei 1000 U/min mit dem Dissolver dispergiert.
Danach wird die Spritzviskosität des Lackes durch weitere Einarbeitung von Butylacetat 98 % / Shellsol A (Gewichtsverhältnis 2,5 : 1) auf eine Auslaufzeit von 21 s eingestellt. Nach Entlüften erfolgt die Spritzapplikation des Lackes (1,5 Kreuzgänge) auf Kunststoffplatten, die aus Bayblend T 65 (Fa. Bayer AG, Techn. Datenblatt v. 25.02.2004) bestehen.

Die Transparenz als Schwarzzahl $M_y$, der Glanz und der Soft-Feel-Effekt werden bestimmt

**Rezeptur 2**

| Pos. | | Einwaage in g |
|---|---|---|
| 1 | Synthalat A-HD 5667 (Synthopol Chemie, Techn. Datenblatt v. 12/2002) | 434.0 |
| 2 | n-Butylacetat 98 % | 1462.0 |
| 3 | Synthoester 1179 (Synthopol Chemie, Techn. Datenblatt v. 12/2002) | 164b.0 |
| 4 | Shellsol A 100 (Shell Chenücals, Techn. Datenblatt v. 12.02.2003) | 366.0 |

(fortgesetzt)

| Pos. | | Einwaage in g |
|---|---|---|
| 5 | Dibutylzinnlaurat 2% in Xylol | 92.0 |
| **Summe** | | **4000.0** |

Die Ergebnisse sind in Tabelle 3 zusammengefasst

**Tabelle 3:**

| Lackformulierung mit | Coatungs-mittel für $SiO_2$ | Einwaage in g | 60°-Reflektometerwert | Schwarzzahl $M_y$ | Soft-Feel-Effekt |
|---|---|---|---|---|---|
| Siliciumdioxid 1 (Stand der Technik) | PE-Wachs | 10.0 | 0.2 | 135 | 1 |
| Siliciumdioxid 2 (gem. Erfindung) | Polysiloxan | 5.5 | 0.2 | 150 | 4 |
| Siliciumdioxid 3 (gem. Erfindung) | Polysiloxan-elastomer | 5.5 | 0.3 | 144 | 5 |

**Patentansprüche**

1. Lackformulierung, enthaltend zumindest ein oberflächenmodifiziertes Siliciumdioxid,
**dadurch gekennzeichnet,**
**dass** sie bei einem 60°-Reflektometerwert von < 3 eine Schwarzzahl $M_y$ von mindestens 140 aufweist.

2. Lackformulierung nach Anspruch 1,
**dadurch gekennzeichnet,**
**dass** es sich um einen Klarlack handelt.

3. Lackformulierung nach Anspruch 1,
**dadurch gekennzeichnet,**
**dass** es sich um einen pigmentierten Lack handelt.

4. Lackformulierung nach einem der Ansprüche 1 bis 3,
**dadurch gekennzeichnet,**
**dass** es sich um eine mattierte Lackformulierung handelt.

5. Lackformulierung nach einem der Ansprüche 1 bis 4,
**dadurch gekennzeichnet,**
**dass** sie zumindest ein mit einem thermoplastischen Elastomer beschichtetes Siliziumdioxid enthält.

6. Lackformulierung nach einem der Ansprüche 1 bis 5,
**dadurch gekennzeichnet,**
**dass** sie zumindest ein mit einem Polyorganosiloxan und/oder modifizierten Polyorganosiloxan beschichtetes Siliziumdioxid enthält.

7. Lackformulierung nach einem der Ansprüche 1 bis 6,
**dadurch gekennzeichnet,**
**dass** sie zumindest eine oberflächenmodifizierte Fällungskieselsäure alleine oder in Mischung mit anderen oberflächenmodifizierten Siliciumdioxiden enthält.

8. Lackformulierung nach einem der Ansprüche 1 bis 6,
**dadurch gekennzeichnet,**
**dass** sie zumindest eine oberflächenmodifizierte Kieselsäure die auf Basis pyrogener Kieselsäure hergestellt wurde, alleine oder in Mischungen mit anderen oberflächenmodifizierten Siliciumdioxiden enthält.

**9.** Lackformulierung nach einem der Ansprüche 1 bis 6,
**dadurch gekennzeichnet,**
**dass** sie zumindest eine oberflächenmodifizierte pyrogene Kieselsäure, alleine oder in Mischungen mit anderen oberflächenmodifizierten Siliciumdioxiden, enthält.

**10.** Lackformulierung nach einem der Ansprüche 1 bis 6,
**dadurch gekennzeichnet,**
**dass** sie zumindest ein oberflächenmodifiziertes Silicagel, alleine oder in Mischungen mit anderen oberflächenmodifizierten Siliciumdioxiden, enthält.

**11.** Lackformulierung nach den Ansprüchen 1 bis 10,
**dadurch gekennzeichnet,**
**dass** sie zumindest ein oberflächenmodifiziertes Siliciumdioxid mit einen Kohlenstoffgehalt von 0.5 - 30 %, bevorzugt 1 - 20 %, insbesondere 2 -10 % aufweist.

**12.** Lackformulierung nach den Ansprüchen 1 bis 11,
**dadurch gekennzeichnet,**
**dass** sie zumindest ein oberflächenmodifizierten Siliciumdioxid mit einer DBP (wasserfrei) von 100 - 600 g/100 g, bevorzugt 200 - 450 g/100 g, insbesondere 250 - 380 g/100 g aufweist.

**13.** Lackformulierung nach den Ansprüchen 1 bis 12,
**dadurch gekennzeichnet,**
**dass** sie zumindest ein oberflächenmodifiziertes Siliciumdioxid mit einer mittleren Partikelgröße $d_{50}$ von 0.5 — 50 μm, bevorzugt 1 — 30 μm, insbesondere 2 — 20 μm aufweist.

**14.** Lackformulierung nach den Ansprüchen 1 bis 13,
**dadurch gekennzeichnet,**
**dass** sie zumindest ein oberflächenmodifiziertes Siliciumdioxid mit einem pH-Wert < 8 aufweist.

**15.** Lackformulierung nach einem der Ansprüche 1 bis 14,
**dadurch gekennzeichnet,**
**dass** sie 0.5 — 15 Gew.-% zumindest eines oberflächenmodifizierten Siliciumdioxids aufweist.

**16.** Lackformulierung nach den Ansprüchen 1 bis 15,
**dadurch gekennzeichnet,**
**dass** sie:

- 5 — 99.5 Gew.-% Festkörper einer Polymerkomponente oder eines Gemisches aus zwei oder mehreren physikalisch oder chemisch vernetzenden Polymerkomponenten und/oder,
- 0 — 80 Gew.-% einer niedermolekularen als Lösemittel fungierenden Komponente oder eines Gemisches solcher niedermolekularer Komponenten,

aufweist.

**17.** Lackformulierung nach den Ansprüchen 1 bis 16,
**dadurch gekennzeichnet,**
**dass** sie zumindest ein Bindemittel ausgewählt aus der Gruppe, die aus Polymerisaten und Copolymerisaten der (Meth)acrylsäure und deren gegebenenfalls weitere funktionelle Gruppen tragenden Estern mit weiteren olefinisch ungesättigten Verbindungen, wie z. B. Styrol; Polyetherpolyole, Polyesterpolyole, Polycarbonatpolyole, Polyurethanpolyole, Epoxidharze, sowie durch Polykondensation hergestellte fettsäuremodifizierte Alkydharze besteht, enthält.

**18.** Verwendung der Lackformulierung gemäß den Ansprüchen 1 bis 17 zur Beschichtung von Kunststoffen und natürlichen sowie künstlichen Ledern.

**Claims**

**1.** A coating formulation containing at least one surface-modified silicon dioxide, **characterized in that** it combines a

60° reflectometer value of < 3 with a black number $M_y$ of at least 140.

2. A coating formulation according to claim 1, **characterized in that** it comprises a clearcoat material.

3. A coating formulation according to claim 1, **characterized in that** it comprises a pigmented coating material.

4. A coating formulation according to any one of claims 1 to 3, **characterized in that** it comprises a matted coating formulation.

5. A coating formulation according to any one of claims 1 to 4, **characterized in that** it comprises at least one silicon dioxide coated with a thermoplastic elastomer.

6. A coating formulation according to any one of claims 1 to 5, **characterized in that** it comprises at least one silicon dioxide coated with a polyorganosiloxane and/or modified polyorganosiloxane.

7. A coating formulation according to any one of claims 1 to 6, **characterized in that** it comprises at least one surface-modified precipitated silica alone or in a mixture with other surface-modified silicon dioxides.

8. A coating formulation according to any one of claims 1 to 6, **characterized in that** it comprises at least one surface-modified silica based on pyrogenic silica, alone or in a mixture with other surface-modified silicon dioxides.

9. A coating formulation according to any one of claims 1 to 6, **characterized in that** it comprises at least one surface-modified pyrogenic silica alone or in a mixture with other surface-modified silicon dioxides.

10. A coating formulation according to any one of claims 1 to 6, **characterized in that** it comprises at least one surface-modified silica gel alone or in a mixture with other surface-modified silicon dioxides.

11. A coating formulation according to any of claims 1 to 10, **characterized in that** it comprises at least one surface-modified silicon dioxide having a carbon content of 0.5% - 30%, preferably 1% - 20%, in particular 2% - 10%.

12. A coating formulation according to any of claims 1 to 11, **characterized in that** it comprises at least one surface-modified silicon dioxide having a DBP (anhydrous) of 100 - 600 g/100 g, preferably 200 - 450 g/100 g, in particular 250 - 380 g/100 g.

13. A coating formulation according to any of claims 1 to 12, **characterized in that** it comprises at least one surface-modified silicon dioxide having a mean particle size $d_{50}$ of 0.5 - 50 μm, preferably 1-30 μm, in particular 2-20 μm.

14. A coating formulation according to any of claims 1 to 13, **characterized in that** it comprises at least one surface-modified silicon dioxide having a pH < 8.

15. A coating formulation according to any one of claims 1 to 14, **characterized in that** it contains 0.5 - 15% by weight of at least one surface-modified silicon dioxide.

16. A coating formulation according to any of claims 1 to 15, **characterized in that** it contains

- 5 — 99.5% by weight solids of a polymer component or of a mixture of two or more physiochemically or chemically crosslinking polymer components
and/or
- 0 — 80% by weight of a low molecular mass component which acts as solvent, or of a mixture of such low molecular mass components.

17. A coating formulation according to any of claims 1 to 16, **characterized in that** it comprises at least one binder selected from the group consisting of polymers and copolymers of (meth)acrylic acid and esters thereof, which if desired carry further functional groups, with further olefinically unsaturated compounds, such as styrene, for example; polyether polyols, polyester polyols, polycarbonate polyols, polyurethane polyols, epoxy resins, and fatty-acid-modified alkyd resins prepared by polycondensation.

18. The use of a coating formulation according to any of claims 1 to 17 for coating a plastic or a natural or synthetic leather.

**Revendications**

1. Composition de laque, contenant au moins un dioxyde de silicium modifié en surface, **caractérisée en ce qu'** elle présente, à une valeur au réflectomètre à 60°C < 3, un indice de noir $M_y$ d'au moins 140.

2. Composition de laque selon la revendication 1, **caractérisée en ce qu'** il s'agit d'une laque transparente.

3. Composition de laque selon la revendication 1, **caractérisée en ce qu'** il s'agit d'une laque pigmentée.

4. Composition de laque selon l'une des revendications 1 à 3, **caractérisée en ce qu'** il s'agit d'une composition de laque matifiée.

5. Composition de laque selon l'une des revendications 1 à 4, **caractérisée en ce qu'** elle contient au moins un dioxyde de silicium enduit d'un élastomère thermoplastique.

6. Composition de laque selon l'une des revendications 1 à 5, **caractérisée en ce qu'** elle contient au moins un dioxyde de silicium enduit d'un polyorganosiloxane et/ ou polyorganosiloxane modifié.

7. Composition de laque selon l'une des revendications 1 à 6, **caractérisée en ce qu'** elle contient au moins un acide silicique précipité modifié en surface, seul ou en mélange avec d'autres dioxydes de silicium modifiés en surface.

8. Composition de laque selon l'une des revendications 1 à 6, **caractérisée en ce qu'** elle contient au moins un acide silicique modifié en surface qui a été préparé sur la base d'acide silicique pyrogène, seul ou en mélanges avec d'autres dioxydes de silicium modifiés en surface.

9. Composition de laque selon l'une des revendications 1 à 6, **caractérisée en ce qu'** elle contient au moins un acide silicique pyrogène modifié en surface, seul ou en mélanges avec d'autres dioxydes de silicium modifiés en surface.

10. Composition de laque selon l'une des revendications 1 à 6, **caractérisée en ce qu'** elle contient au moins un gel de silice modifié en surface, seul ou en mélanges avec d'autres dioxydes de silicium modifiés en surface.

11. Composition de laque selon les revendications 1 à 10, **caractérisée en ce qu'** elle présente au moins un dioxyde de silicium modifié en surface avec une teneur en carbone de 0,5 — 30 %, de préférence de 1 — 20 %, en particulier de 2 — 10 %.

12. Composition de laque selon les revendications 1 à 11, Composition de laque selon l'une des revendications 1 à 10, **caractérisée en ce qu'** elle présente au moins un dioxyde de silicium modifié en surface avec une absorption de dibutylphtalate (exempt d'eau) de 100 — 600 g/100 g, de préférence de 200 — 450 g/100 g, en particulier de 250 — 380 g/100 g.

13. Composition de laque selon les revendications 1 à 12,

**caractérisée en ce qu'**
elle présente au moins un dioxyde de silicium modifié en surface avec une granulométrie moyenne dso de 0,5 — 50 μm, de préférence de 1 — 30 μm en particulier de 2 — 20 μm.

**14.** Composition de laque selon les revendications 1 à 13,
**caractérisée en ce qu'**
elle présente au moins un dioxyde de silicium modifié en surface avec unpH<8.

**15.** Composition de laque selon l'une des revendications 1 à 14,
**caractérisée en ce qu'**
elle présente 0,5 - 15 % en poids d'au moins un dioxyde de silicium modifié en surface.

**16.** Composition de laque selon les revendications 1 à 15,
**caractérisée en ce qu'**
elle présente :

- de 5 — 99,5 % en poids de solides d'un composant polymère ou d'un mélange de deux ou plusieurs composants polymères réticulés physiquement ou chimiquement, et/ou
- de 0 — 80 % en poids d'un composant de faible poids moléculaire agissant en tant que solvant ou d'un mélange de tels composants de faible poids moléculaire.

**17.** Composition de laque selon les revendications 1 à 16,
**caractérisée en ce qu'**
elle contient au moins un liant choisi dans le groupe composé de polymérisats et de copolymérisats de l'acide (méth) acrylique ou de ses esters, portant éventuellement d'autres groupes fonctionnels, avec d'autres composés à insaturation oléfinique, par exemple le styrène, les polyoles de polyéther, les polyols de polyester, les polyols de polycarbonate, les polyols de polyuréthane, les résines époxy, ainsi que les résines alkyde modifiées par des acides gras, produites par polycondensation.

**18.** Utilisation de la composition de laque selon les revendications 1 à 17, pour le revêtement de matières plastiques et de cuirs naturels et artificiels.